# EUROPEAN PATENT APPLICATION

(11) **EP 4 722 023 A1**
(43) Date of publication of application: **08.04.2026**
(21) Application number: 24887559.3
(22) Date of filing: 21.08.2024
(51) Int. Cl.: B60L 53/10, H02J 7/00

(54) **CHARGING METHOD AND APPARATUS, COMPUTER DEVICE AND STORAGE MEDIUM**

(30) Priority: 07.11.2023 CN 202311475806
(71) Applicant: Contemporary Amperex Technology Co., Limited, Ningde, Fujian 352100 (CN)
(72) Inventor: HUANG, Jintao, Ningde, Fujian 352100 (CN); DU, Mingshu, Ningde, Fujian 352100 (CN); ZHANG, Shichang, Ningde, Fujian 352100 (CN); CHEN, Yushan, Ningde, Fujian 352100 (CN); HUANG, Shan, Ningde, Fujian 352100 (CN)
(74) Representative: Gong, Jinping
(86) International application number: PCT/CN2024/113765
(87) International publication number: WO 2025/097939

(57) **Abstract**

Provided are a charging method and apparatus, a computer device, and a storage medium. The method includes: when a battery (102) reaches an end-of-charge phase, acquiring a charging mode of the battery during the end-of-charge phase, where in the charging mode, a charging current of the battery changes dynamically; then determining an electrical parameter value required for charging the battery during the end-of-charge phase on the basis of the charging mode and status information of the battery; and finally, sending the electrical parameter value to a charging pile of the battery until a charging cut-off condition of the battery is reached. The method can shorten the charging duration of the battery during the end-of-charge phase.

## Description

### CROSS REFERENCE

The present application makes reference to Chinese Patent Application No. 2023114758061 filed on November 07, 2023 and entitled "Charging method and apparatus, computer device, and storage medium", which is incorporated herein by reference in its entirety.

### TECHNICAL FIELD

The present application relates to the technical field of batteries, and in particular to a charging method and apparatus, a computer device, and a storage medium.

### BACKGROUND

With the development of new energy, there are more and more electric devices powered by batteries.

In the related art, taking an electric automobile as an example of the electric device, in order to improve the charging safety of the electric automobile and reduce the risks of lithium precipitation, overcharging, and the like of the battery of the electric automobile during charging, the battery is usually charged during the end-of-charge phase of the battery with a small current.

However, the charging mode during the end-of-charge phase of the battery in the related art has a problem of too long charging duration.

### SUMMARY

In view of this, it is necessary to provide a charging method and apparatus, a computer device, and a storage medium for the above technical problems, which can reduce the charging duration during the end-of-charge phase of the battery.

In a first aspect, an embodiment of the present application provides a charging method, including:
when a battery reaches an end-of-charge phase, acquiring a charging mode of the battery during the end-of-charge phase, where in the charging mode, a charging current of the battery changes dynamically;
determining an electrical parameter value required for charging the battery during the end-of-charge phase on the basis of the charging mode and status information of the battery; and
sending the electric parameter value to a charging pile of the battery until a charging cut-off condition of the battery is reached.

In the embodiment of the present application, when the battery reaches the end-of-charge phase, the charging mode of the battery during the end-of-charge phase is acquired, where in the charging mode, the charging current of the battery changes dynamically; then the electrical parameter value required for charging the battery during the end-of-charge phase is determined on the basis of the charging mode and status information of the battery; and finally, the electrical parameter value is sent to the charging pile of the battery until the charging cut-off condition of the battery is reached. In this embodiment, when the charging process of the battery enters the end-of-charge phase, the charging mode of the battery during the end-of-charge phase is determined, and the dynamic change of the battery in the charging mode is equivalent to the dynamic change of the charging current in the charging process during the end-of-charge phase; and since the status information of the battery can reflect the current state of the battery, the charging mode of the battery is combined with the status information of the battery to determine the electrical parameter value required for charging the battery during the end-of-charge phase, so that when the charging pile charges the battery during the end-of-charge phase of the battery, the charging current of the battery is dynamically adjusted without damaging the battery, and the charging capability of the battery during the end-of-charge phase is fully utilized, thereby reducing the charging duration of the battery during the end-of-charge phase; and moreover, an end-of-charge protection condition and a charging cut-off condition are set for the battery, so that the battery can be charged timely by the charging mode of protecting the end-of-charge phase, and when the battery fully charged, charging is timely stopped, so that the battery is free of overcharging and lithium precipitation, thereby improving the charging safety and reliability of the battery during the end-of-charge phase.

In one of the embodiments, the method further includes:
when a battery voltage of the battery reaches a first voltage threshold, determining that the battery reaches the end-of-charge phase; or,
when a battery capacity of the battery reaches a first capacity threshold, determining that the battery reaches the end-of-charge phase; or,
when the battery voltage of the battery reaches the first voltage threshold and the battery capacity reaches the first capacity threshold, determining that the battery reaches the end-of-charge phase.

In this embodiment of the present application, when the battery voltage of the battery reaches the first voltage threshold, it is determined that the battery reaches the end-of-charge phase, and/or when the battery capacity of the battery reaches the first capacity threshold, it is determined that the battery reaches the end-of-charge phase. In this embodiment, since the battery voltage will gradually increase during the charging process of the battery, whether battery charge enters the end-of-charge phase can be accurately determined by determining whether the battery voltage reaches the first voltage threshold as whether the battery reaches an end-of-charge phase protection condition, thereby improving the accuracy and reliability of charging the battery during the end-of-charge phase. In addition, by taking the battery capacity as an indicator, whether the battery reaches the end-of-charge phase protection condition can be more intuitively and accurately judged, thereby improving the accuracy and reliability of charging the battery during the end-of-charge phase.

In one of the embodiments, the acquiring a charging mode of the battery during the end-of-charge phase includes:
acquiring response information of the charging pile;
determining a response speed of the charging pile according to the response information of the charging pile; and
determining the charging mode of the battery during the end-of-charge phase according to the response speed of the charging pile.

In the embodiment of the present application, the response information of the charging pile is acquired, the response speed of the charging pile is determined according to the response information of the charging pile, and then the charging mode of the battery during the end-of-charge phase is determined according to the response speed of the charging pile. In this embodiment, since the response speed reflects the speed at which the charging pile charges the battery through the received electrical parameter value, the charging mode of the battery during the end-of-charge phase is determined through the response speed of the charging pile, and a suitable charging mode can be selected for the battery during the end-of-charge phase, so as to increase the charging speed of the battery during the end-of-charge phase to the maximum extend and shorten the charging duration.

In one of the embodiments, the determining a response speed of the charging pile according to the response information of the charging pile includes:
according to the response information of the charging pile, acquiring a first moment at which a historical electrical parameter value is sent to the charging pile and a second moment at which the battery is charged by the charging pile with a target electrical parameter, wherein an absolute value of a difference between the historical electrical parameter and the target electrical parameter is less than a preset difference threshold;
determining a duration at which the charging pile charges the battery according to the first moment and the second moment; and
determining the response speed of the charging pile according to the duration.

In the embodiment of the present application, the first moment at which the historical electrical parameter value is sent to the charging pile and the second moment at which the battery is charged by the charging pile with the target electrical parameter are acquired according to the response information of the charging pile, where an absolute value of a difference between the historical electrical parameter and the target electrical parameter is less than a preset difference threshold; and then the duration of charging the battery by the charging pile is determined according to the first moment and the second moment, and finally the response speed of the charging pile is determined according to the duration. In this embodiment, the charging pile needs to process the electrical parameter value sent by a battery management system, and therefore, the response speed of the charging pile is determined by evaluating the duration of the charging pile responding to the electrical parameter value requested by the battery management system, thereby improving the accuracy of the response speed of the charging pile, making the subsequently determined charging mode of the battery during the end-of-charge phase more reliable.

In one of the embodiments, the determining the charging mode of the battery during the end-of-charge phase according to the response speed of the charging pile includes:
when the response speed of the charging pile is greater than a preset speed threshold, determining that the charging mode of the battery during the end-of-charge phase is constant power charging.

In this embodiment of the present application, because constant power charging is an efficient charging mode, the battery is charged at a constant power when the charging pile has a relatively fast response speed, so that the charging pile can maintain the charging stability relatively quickly, thereby improving the charging efficiency of the battery during the end-of-charge phase.

In one of the embodiments, the acquiring a charging mode of the battery during the end-of-charge phase includes:
acquiring characteristic information of the battery; and
determining the charging mode of the battery during the end-of-charge phase according to the characteristic information of the battery.

In the embodiment of the present application, characteristic information of the battery is acquired, and the charging mode of the battery during the end-of-charge phase is determined according to the characteristic information of the battery. In this embodiment, since the characteristic information represents the status and charging characteristics of the battery, the charging mode of the battery during the end-of-charge phase is determined according to the characteristic information of the battery, and the charging capability of the battery during the end-of-charge phase can be fully exerted through the determined charging mode, thereby increasing the charging rate of the battery during the end-of-charge phase and shortening the charging duration of the battery during the end-of-charge phase.

In one of the embodiments, the characteristic information includes a current temperature of the battery, and the determining a charging mode of the battery during the end-of-charge phase according to the characteristic information of the battery includes:
when the current temperature of the battery is greater than a preset temperature threshold, determining that the charging mode of the battery during the end-of-charge phase is constant voltage charging.

In this embodiment, the temperature of the battery is greater than a preset temperature threshold, indicating that the temperature of the battery during the end-of-charge phase is too high; at this time, the temperature of the battery should be gradually decreased during the end-of-charge phase of charging, and in the process that the temperature of the battery is decreased from a high temperature to a normal temperature, the battery response characteristic changes greatly, which is not conducive to control, and the use of the constant voltage charging mode can minimize the influence on the battery in response to the change of the battery characteristics, thereby improving the reliability of charging the battery during the end-of-charge phase while shortening the charging duration during the end-of-charge phase of the battery.

In one of the embodiments, the characteristic information includes a battery type, and the determining a charging mode of the battery during the end-of-charge phase according to the characteristic information of the battery includes:
acquiring a charging mode corresponding to the battery type from a preset charging mode calibration table, wherein the charging mode calibration table comprises corresponding relationships between different battery types and charging modes; and
determining the charging mode corresponding to the battery type as the charging mode of the battery during the end-of-charge phase.

In the embodiment of the present application, the charging mode corresponding to the battery type is acquired from the preset charging mode calibration table, and the charging mode corresponding to the battery type is determined as the charging mode of the battery during the end-of-charge phase, where the charging mode calibration table includes corresponding relationships between different battery types and charging modes. In this embodiment, by pre-calibrating the corresponding relationships between different battery types and charging modes, the optimal charging mode of the battery during the end-of-charge phase is directly determined by using the charging mode calibration table, thereby simplifying the process of determining the charging mode of the battery during the end-of-charge phase, and increasing the response speed of charging the battery by using the charging mode during the end-of-charge phase.

In one of the embodiments, the determining an electrical parameter value required for charging the battery during the end-of-charge phase on the basis of the charging mode and status information of the battery includes:
acquiring an interaction parameter type between the charging pile and the battery;
determining a charging parameter value of the battery indicated by the charging mode according to the charging mode; and
converting the charging parameter value of the battery into the electrical parameter value required for charging the battery during the end-of-charge phase according to the interaction parameter type and the status information of the battery.

In the embodiment of the present application, an interaction parameter type between the charging pile and the battery is acquired first, the charging parameter value of the battery indicated by the charging mode is determined according to the charging mode, and the charging parameter value of the battery is converted into a real-time electrical parameter value required for charging the battery during the end-of-charge phase according to the interaction parameter type and the status information of the battery. In this embodiment, the charging mode may represent a mode by which the battery is charged. The status information of the battery may represent a real-time status of the battery. The interaction parameter type may represent an interactive mode between the charging pile and the battery. Therefore, the charging parameter value of the battery indicated by the charging mode can be determined according to the charging mode, so that the charging parameter value of the battery is more reliable; moreover, the charging parameter value of the battery is converted into the electrical parameter value required by the battery according to the interaction parameter type between the charging pile and the battery and the status information of the battery, so that the charging process of the battery during the end-of-charge phase can be accurately controlled, the charging current of the battery during the end-of-charge phase can be dynamically adjusted, the charging capability of the battery at each moment of the end-of-charge phase can be maximized, the charging speed of the battery during the end-of-charge phase can be increased, and the charging duration of the battery during the end-of-charge phase can be shortened.

In one of the embodiments, the acquiring an interaction parameter type between the charging pile and the battery includes:
acquiring a plurality of charging parameter types currently available to the charging pile and a usage rate of each of the charging parameter types; and
determining the charging parameter type with the usage rate meeting a preset condition as the interaction parameter type between the charging pile and the battery.

In the embodiment of the present application, the plurality of charging parameter types currently available to the charging pile and the usage rates of the charging parameter types are acquired, and the charging parameter type with the usage rate meeting a preset condition is determined as the interaction parameter type between the charging pile and the battery. In this embodiment, the preset condition may be set by a user in advance. Therefore, by selecting the charging parameter type with the usage rate meeting a preset condition as the interaction parameter type between the charging pile and the battery, the charging experience and charging efficiency of the user can be improved.

In one of the embodiments, when the charging mode is constant power charging, the charging parameter value of the battery indicated by the charging mode is constant charging power;
determining a charging parameter value of the battery indicated by the charging mode according to the charging mode; and
acquiring a power value corresponding to the battery type of the battery from a preset type and power relationship, wherein the type and power relationship comprises a plurality of corresponding relationships between different battery types and the power values; and
determining the power value corresponding to the battery type as the constant charging power.

In the embodiment of the present application, the power value corresponding to the battery type of the battery is acquired from a preset type power relationship, and the power value corresponding to the battery type is determined as the constant charging power, where the type power relationship table includes corresponding relationships between different battery types and the power values. In this embodiment, the constant charging power of the battery in the constant power charging mode is determined by the pre-calibrating mode, so that the flow of calculating the constant charging power is simplified, and the charging efficiency is improved; moreover, the constant charging power may be full charging cut-off power, and the charging current is dynamically adjusted by charging the battery during the end-of-charge phase of the battery through the full charging cut-off power, so that the charging rate of the end-of-charge phase of the battery can be increased without damaging the battery, thereby shortening the charging duration of the end-of-charge phase.

In one of the embodiments, when the charging mode is the constant voltage charging, the charging parameter value of the battery indicated by the charging mode is a constant charging voltage;
determining a charging parameter value of the battery indicated by the charging mode according to the charging mode; and
acquiring a voltage value corresponding to the battery type of the battery from a preset type and voltage relationship, where the type and voltage relationship includes a plurality of corresponding relationships between different battery types and the voltage values; and
determining the voltage value corresponding to the battery type as the constant charging voltage.

In the embodiment of the present application, the voltage value corresponding to the battery type of the battery is acquired from the preset type voltage relationship, and the voltage value corresponding to the battery type is determined as the constant charging voltage, where the type voltage relationship table includes corresponding relationships between different battery types and voltage values. In this embodiment, the constant charging voltage of the battery in the constant voltage charging mode is determined by the pre-calibrating mode, so that the flow of calculating the constant charging voltage is simplified, and the charging efficiency is improved; moreover, the constant charging voltage may be full charging cut-off voltage, and the charging current is dynamically adjusted by charging the battery during the end-of-charge phase of the battery through the full charging cut-off voltage, so that the charging rate of the end-of-charge phase of the battery can be increased without damaging the battery, thereby shortening the charging duration of the end-of-charge phase.

In one of the embodiments, the converting the charging parameter value of the battery into the electrical parameter value required for charging the battery during the end-of-charge phase according to the interaction parameter type and the status information of the battery includes:
when the interaction parameter type is a current, converting the charging parameter value of the battery into a charging current value required for charging the battery during the end-of-charge phase according to the status information of the battery;
when the interaction parameter type is a voltage, converting the charging parameter value of the battery into a charging voltage value required for charging the battery during the end-of-charge phase according to the status information of the battery; and
when the interaction parameter type is power, the charging parameter value of the battery is converted into the real-time charging power value required for charging the battery at the end-of-charge phase according to the status information of the battery.

In the embodiment of the present application, in the case where the interaction parameter type is current, the charging parameter value of the battery is converted into the charging current value required for charging the battery at the end-of-charge phase according to the status information of the battery, in the case where the interaction parameter type is voltage, the charging parameter value of the battery is converted into the charging voltage value required for charging the battery at the end-of-charge phase according to the status information of the battery, and in the case where the interaction parameter type is power, the charging parameter value of the battery is converted into the real-time charging power value required for charging the battery at the end-of-charge phase according to the status information of the battery. In this embodiment, the battery charging parameter is converted into the charging parameter value required by the battery and the charging parameter value corresponding to the charging parameter type of the battery is sent to the charging pile, so that the interactive effectiveness with the charging pile is improved; moreover, because the status information of the battery can reflect a current status of the battery and the charging parameter value determined with the current status information of the battery, the charging capability of the battery during the end-of-charge phase can fully exerted, and the charging speed of the battery during the end-of-charge phase can be increased, thereby shortening the charging duration of the battery during the end-of-charge phase.

In one of the embodiments, the method further includes:
when the electrical parameter value is sent to the charging pile, detecting a charging status of the battery;
when the charging status of the battery is abnormal, re-executing the acquiring the interaction parameter type between the charging pile and the battery, so as to acquire a new interaction parameter type; and
converting the charging parameter value of the battery into the electrical parameter value required for charging the battery during the end-of-charge phase according to the interaction parameter type and the status information of the battery.

In the embodiment of the present application, when the electrical parameter value is sent to the charging pile, the charging status of the battery is detected, and when the charging status of the battery is abnormal, the acquisition of the interaction parameter type between the charging pile and the battery is re-executed, a new interaction parameter type is acquired, and finally, the charging parameter value of the battery is converted into a new electrical parameter value required for charging the battery during the end-of-charge phase according to the new interaction parameter type and the status information of the battery. In this embodiment, when the charging status of the battery is abnormal, the charging parameter type is re-acquired and the charging parameter value is converted, which may reduce the abnormal situation of the battery during the charging process, thereby protecting the safety and life of the battery.

In one of the embodiments, the charging cut-off condition includes at least one of the following:
the battery voltage of the battery reaches a second voltage threshold; and
the battery capacity of the battery reaches a second capacity threshold.

In the embodiment of the present application, the charging cut-off condition includes at least one of the following: the battery voltage of the battery reaches a second voltage threshold; and the battery capacity of the battery reaches a second capacity threshold. In this embodiment, since the longer the charging duration of the battery, the higher the voltage, the battery voltage and/or the battery capacity are used as the determination indicators to judge whether the battery reaches the charging cut-off condition, which reduces the risks of overcharge, lithium precipitation, and the like during charging of the battery, and improves the safety and reliability of battery charging.

In a second aspect, an embodiment of the present application further provides a charging apparatus, including:
an acquisition module, configured to, when a battery reaches an end-of-charge phase, acquire a charging mode of the battery during the end-of-charge phase, wherein in the charging mode, a charging current of the battery changes dynamically;
a determination module, configured to determine an electrical parameter value required for charging the battery during the end-of-charge phase on the basis of the charging mode and status information of the battery; and
a sending module, configured to send the electrical parameter value to a charging pile of the battery until a charging cut-off condition of the battery is reached.

In a third aspect, an embodiment of this application provides a computer device, including a memory and a processor, where the memory stores a computer program; and the processor, when executing the computer program, implements steps of the method provided in any one embodiment in the first aspect.

In a fourth aspect, an embodiment of the present application further provides a computer-readable storage medium, storing a computer program, where the computer program, when executed by a processor, implements steps of the method provided in any one embodiment in the first aspect.

In a fifth embodiment of the present application further provides a computer program product, including a computer program, where the computer program, when executed by a processor, implements the method provided in any one embodiment in the first aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic diagram of current and voltage changes of an LFP battery during an end-of-charge phase according to an embodiment;
FIG. 2 is a diagram of an application environment of a charging method according to an embodiment;
FIG. 3 is a schematic flow diagram of a charging method according to an embodiment;
FIG. 4 is a schematic flow diagram of a charging method according to another embodiment;
FIG. 5 is a schematic flow diagram of a charging method according to another embodiment;
FIG. 6 is a schematic flow diagram of a charging method according to another embodiment;
FIG. 7 is a schematic flow diagram of a charging method according to another embodiment;
FIG. 8 is a schematic flow diagram of a charging method according to another embodiment;
FIG. 9 is a schematic flow diagram of a charging method according to another embodiment;
FIG. 10 is a schematic flow diagram of a charging method according to another embodiment;
FIG. 11 is a schematic flow diagram of a charging method according to another embodiment;
FIG. 12 is a schematic flow diagram of a charging method according to another embodiment;
FIG. 13 is a schematic flow diagram of a charging method according to another embodiment;
FIG. 14 is a schematic flow diagram of a charging method according to another embodiment;
FIG. 15 is a structure diagram of a charging apparatus according to an embodiment;
FIG. 16 is a structure diagram of a charging apparatus according to another embodiment;
FIG. 17 is a structure diagram of a charging apparatus according to another embodiment;
FIG. 18 is a structure diagram of a charging apparatus according to another embodiment;
FIG. 19 is a structure diagram of a charging apparatus according to another embodiment;
FIG. 20 is a structure diagram of a charging apparatus according to another embodiment;
FIG. 21 is a structure diagram of a charging apparatus according to another embodiment;
FIG. 22 is a structure diagram of a charging apparatus according to another embodiment;
FIG. 23 is a structure diagram of a charging apparatus according to another embodiment;
FIG. 24 is a structure diagram of a charging apparatus according to another embodiment;
FIG. 25 is a structure diagram of a charging apparatus according to another embodiment;
FIG. 26 is a structure diagram of a charging apparatus according to another embodiment;
FIG. 27 is a structure diagram of a charging apparatus according to another embodiment;
FIG. 28 is a structure diagram of a charging apparatus according to another embodiment; and
FIG. 29 is an internal structure diagram of a computer device according to an embodiment.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise. Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "a plurality of" refers to more than two (including two).

With the development of new energy, electric automobiles are more and more widely used.

At present, due to the risk limitation of lithium precipitation, overcharge, and the like of the battery, when the battery of the electric automobile is charged, the battery is usually charged with a small current during the end-of-charge phase of the battery, but this charging mode causes a long charging duration of the battery end-of-charge phase.

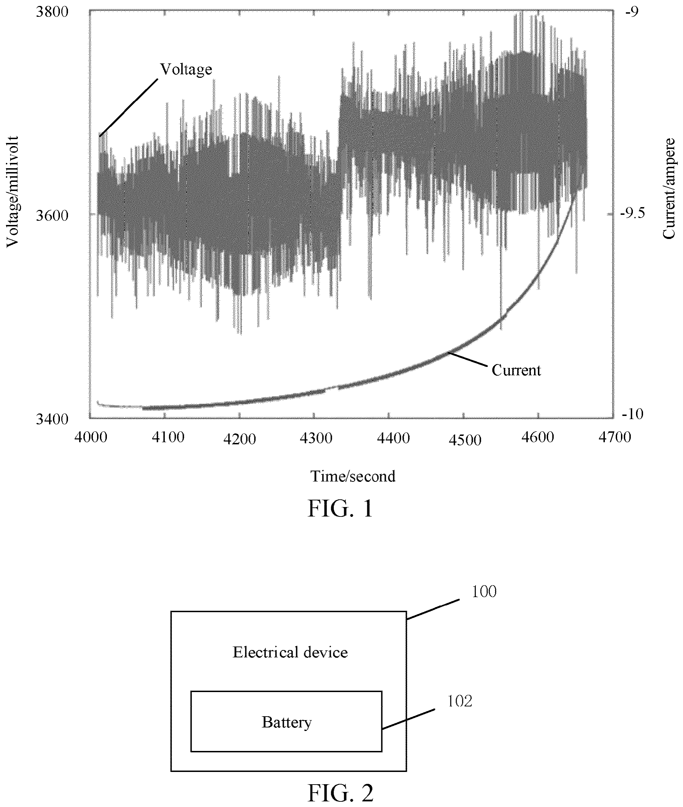

Taking a battery being a 101 Ah lithium iron phosphate (LiFePO4, LFP) battery and the battery being charged during an end-of-charge phase at a charging current of 0.1C as an example, as shown in FIG. 1, FIG. 1 is a schematic diagram of current and voltage changes of the LFP battery during the end-of-charge phase, where the end-of-charge phase is a charging process from a 98% state of charge (SOC) to a 100% SOC of the battery; it may be seen from FIG. 1 that the charging time of the LFP battery during the end-of-charge phase is 654.4 seconds, and when the actual charging ampere hour is 1.7 amperes, the charge quantity is 5.9 watts.

Since the higher the SOC of the battery, the higher the battery voltage and the lower the charging capacity of the battery, the LFP battery can substantially receive a current of 0.1C at a cut-off voltage of 3.65 V, and should be able to receive a larger current and have a stronger charging capability at a voltage of about 3.4 V in an initial phase of charging during the end-of-charge phase. However, in the current charging mode, these charging capabilities are wasted.

Based on the above considerations, in order to make full use of the charging capability of the battery during the end-of-charge phase and shorten the charging duration of the battery during the end-of-charge phase, the present application provides a charging method, which determines a charging mode in which the charging current of the battery during the end-of-charge phase dynamically changes when the electric device reaches the end-of-charge phase protection condition, then determines the real-time electrical parameter value required for charging the battery during the end-of-charge phase on the basis of the charging mode and the status information of the battery, and charges the battery with the real-time electrical parameter value until the charging cut-off condition of the battery is reached, and stops charging the battery.

In such a charging method, the charging current of the battery during the end-of-charge phase of the battery dynamically changes, the charging capability of the battery during the end-of-charge phase is fully utilized, and the charging duration of the battery during the end-of-charge phase is shortened, and the real-time electrical parameter value required by the battery during the end-of-charge phase is determined on the basis of the status information and the charging mode of the battery, so that the charging duration of the end-of-charge phase is shortened while the battery is charged during the end-of-charge phase with the real-time electrical parameter value without damaging the battery.

Of course, it should be understood that the technical effects that may be achieved by the charging method provided in the embodiments of the present application are not limited thereto, and other technical effects may also be achieved, for example, the end-of-charge phase protection condition and the charging cut-off condition for the battery are set, so that the battery can enter a charging mode for protecting charging during the end-of-charge phase and exit charging in time, so that the battery does not have problems such as overcharge and lithium precipitation, and the safety, reliability, and the like of the battery charging are improved. Technical effects that can be achieved in the embodiments of the present application may specifically refer to the following embodiments.

It should be noted that the LFP battery is merely an example, and may be another type of battery, and a type of the battery is not limited in the present application, and the charging method in the embodiment of the present application may be applied to all types of batteries.

The battery disclosed in the embodiments of the present application may be, but not limited to, used in an electric device such as a vehicle, a ship, or an aircraft.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an electric device according to an embodiment of the present application, as shown in FIG. 2, FIG. 2 is a schematic structural diagram of an electric device 100 according to an embodiment of the present application, where a battery 102 is a power source of the electric device 100.

The following describes the charging method for a battery during an end-of-charge phase by using a battery management system in an electric device as an execution body (the battery management system is not shown in FIG. 2).

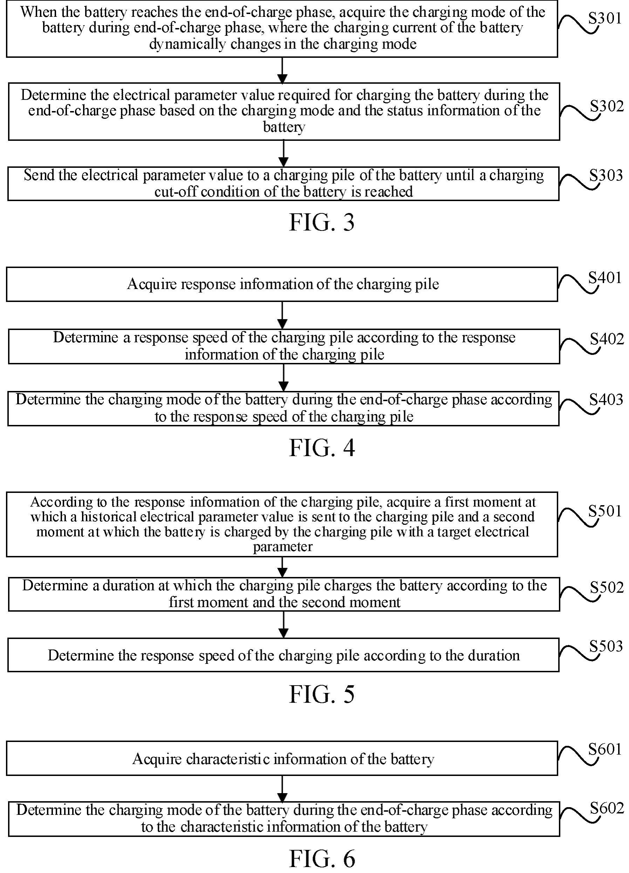

In an exemplary embodiment, as shown in FIG. 3, a charging method is provided, and the method is applied to the battery management system of the electric device in FIG. 2 as an example for description, and includes the following steps:
S301, when a battery reaches an end-of-charge phase, a charging mode of the battery during the end-of-charge phase is acquired, where in the charging mode, a charging current of the battery changes dynamically.

The end-of-charge phase may be a period when a battery will be fully charged, and is a charging end phase of the battery during the charging process; for example, the battery charging process may be divided into an initial charging phase, a middle charging phase, and an end charging phase, where the initial charging phase of the battery is from a start moment of charging to a first charging moment, the middle charging phase of the battery is from an end moment of the initial charging phase to a second charging moment, and the end charging phase of the battery is from an end moment of the middle charging phase to a moment when the battery is fully charged. For example, a period when the battery is between 98% and 100% of the power capacity may be determined as the end-of-charge phase, that is, when the battery reaches 98% of the power capacity, it is determined that the battery reaches the end-of-charge phase.

In some embodiments, reaching the end-of-charge phase may also mean that the charged duration of the battery reaches a preset duration; for example, when the charged duration of the battery reaches the preset duration, it is determined that the battery reaches the end-of-charge phase.

In the battery management system, the charging mode of the battery during the end-of-charge phase has been preset. Therefore, when the battery reaches the end-of-charge phase protection condition, the charging mode of the battery during the end-of-charge phase may be directly acquired from a storage library of the battery management system, where the charging current of the battery during the end-of-charge phase of the battery dynamically changes in the charging mode.

The charging mode may include a change of the charging current of the battery during the end-of-charge phase, and therefore, the change of the charging current of the battery during the end-of-charge phase may be directly acquired from the storage library of the battery management system.

For example, the change of the charging current of the battery during the end-of-charge phase may be a linear change or a non-linear change, and the change of the charging current of the battery during the end-of-charge phase may also carry the initial charging current and the cut-off charging current of the battery during the end-of-charge phase to dynamically change between the initial charging current and the cut-off charging current.

S302, an electrical parameter value required for charging the battery during the end-of-charge phase is determined on the basis of the charging mode and status information of the battery.

The status information of the battery may be a status of the battery during charging at the current moment, and the status information of the battery may include a temperature, an SOC, a voltage, and the like of the battery.

On the basis of the charging mode and the status information of the battery, the electrical parameter value required by the battery during the end-of-charge phase is determined, where the electrical parameter value may change in real time with the charging mode and the status information of the battery, and the electrical parameter value may be a current value, a voltage value, a power value, and the like.

The mode of determining the electrical parameter value required for charging the battery during the end-of-charge phase may be determining the electrical parameter value required for charging the battery during the end-of-charge phase through a pre-trained parameter calculation model; specifically, the charging mode and the status information of the battery are inputted into the parameter calculation model, the charging mode of the battery during the end-of-charge phase and the status information of the battery at the current moment are analyzed by using the parameter calculation model, and the electrical parameter value required for charging the battery during the end-of-charge phase is outputted.

In some embodiments, the electrical parameter value required for charging the battery during the end-of-charge phase may also be determined through a preset corresponding relationship; for example, the corresponding relationship includes electrical parameter values corresponding to the status information of the battery in different charging modes; the charging mode of the battery during the end-of-charge phase and the electrical parameter value corresponding to the status information of the battery at the current moment may be obtained from the corresponding relationship, and the electrical parameter value is determined as the electrical parameter value of the battery at the current moment required by the battery during the end-of-charge phase.

It should be noted that the electrical parameter value required for charging the battery during the end-of-charge phase may change in real time according to different status information of the battery.

S303, the electric parameter value is sent to a charging pile of the battery until a charging cut-off condition of the battery is reached.

After the electrical parameter value required for charging the battery during the end-of-charge phase is determined, the electrical parameter value may be sent to the charging pile corresponding to the battery, so that the charging pile charges the battery by using the electrical parameter value until the charging cut-off condition of the battery is reached, and the charging pile is indicated to stop charging the battery.

After the battery management system sends the electrical parameter value to the charging pile of the battery, the charging pile charges the battery with the electrical parameter value; during the charging process of the battery during the end-of-charge phase, the status information of the battery changes in real time. Therefore, after the battery management system detects that the status information of the battery changes, the battery management system may determine, according to the charging mode of the battery during the end-of-charge phase and the status information of the battery, the electrical parameter value required for charging the battery during the end-of-charge phase, and send the electrical parameter value to the charging pile of the battery, until the battery management system detects that the battery reaches the charging cut-off condition, the charging pile may be indicated to stop charging the battery.

The charging cut-off condition may include at least one of conditions such as a timing cut-off, a voltage cut-off, a current cut-off, and a temperature cut-off. For example, the timing cut-off may represent that a charging duration for charging the battery by the charging pile during the end-of-charge phase of the battery reaches a preset cut-off duration, the voltage cut-off may represent that the voltage of the battery reaches a preset voltage threshold, the current cut-off may represent that the current of the battery reaches a preset current threshold, and the temperature cut-off may represent that the temperature of the battery reaches a preset temperature threshold.

In the charging method provided in the embodiment of the present application, when the battery reaches the end-of-charge phase, the charging mode of the battery during the end-of-charge phase is acquired, where in the charging mode, the charging current of the battery changes dynamically; then the electrical parameter value required for charging the battery during the end-of-charge phase is determined on the basis of the charging mode and status information of the battery; and finally, the electrical parameter value is sent to the charging pile of the battery until the charging cut-off condition of the battery is reached. In this embodiment, when the charging process of the battery enters the end-of-charge phase, the charging mode of the battery during the end-of-charge phase is determined, and the dynamic change of the battery in the charging mode is equivalent to the dynamic change of the charging current in the charging process during the end-of-charge phase; and since the status information of the battery can reflect the current state of the battery, the charging mode of the battery is combined with the status information of the battery to determine the electrical parameter value required for charging the battery during the end-of-charge phase, so that when the charging pile charges the battery during the end-of-charge phase of the battery, the charging current of the battery is dynamically adjusted without damaging the battery, and the charging capability of the battery during the end-of-charge phase is fully utilized, thereby reducing the charging duration of the battery during the end-of-charge phase; and moreover, an end-of-charge protection condition and a charging cut-off condition are set for the battery, so that the battery can be charged timely by the charging mode of protecting the end-of-charge phase, and when the battery fully charged, charging is timely stopped, so that the battery is free of overcharging and lithium precipitation, thereby improving the charging safety and reliability of the battery during the end-of-charge phase.

How to determine that the battery reaches the end-of-charge phase is described below through an embodiment. In an exemplary embodiment, this embodiment includes: when the battery voltage of the battery reaches the first voltage threshold, it is determined that the battery reaches the end-of-charge phase, and/or when the battery capacity of the battery reaches the first capacity threshold, it is determined that the battery reaches the end-of-charge phase.

The battery management system collects various status information of the battery of the electrical device in real time, including battery voltage, current, temperature, capacity, and the like.

Since the battery voltage will gradually increase during the charging process of the battery, the battery voltage may be used as an indicator of the battery reaching the end-of-charge phase.

The battery management system may collect the battery voltage in real time by using a voltage sensor, and the battery management system may determine that the battery reaches the end-of-charge phase when detecting that the battery voltage of the battery reaches the first voltage threshold.

Taking the LFP battery as an example, the first voltage threshold may be 3.6V, and if the battery is a lithium nickel cobalt manganese oxide (Ni, Co, Mn; NCM) battery, the first voltage threshold may be 4.23V.

It should be noted that values of the first voltage threshold may vary with different types of batteries, and a specific value of the first voltage threshold may be determined through an experiment or a charging capability of the battery.

The end-of-charge phase of the battery represents a phase immediately before the battery level reaches the rated capacity, and may represent the charging degree of the battery, and thus the battery capacity may be used as an indicator of the battery reaching the end-of-charge phase.

The battery capacity may represent the currently available electric energy of the battery; the battery capacity may represented by an actual available electric quantity of the battery, or may be represented by a ratio (SOC) of the actual available electric quantity of the battery to the rated capacity of the battery.

The battery management system will collect the actual available electric quantity of the battery in the electrical device. Therefore, the battery management system may directly determine the collected actual available electric quantity of the battery as the battery capacity, or the battery management system may calculate a ratio of the actual available electric quantity to the rated capacity of the battery after collecting the actual available electric quantity of the battery, and determine the ratio as the battery capacity of the electrical device. The actual electric quantity of the battery may be collected by a battery capacity tester.

The battery management system may determine that the battery reaches the end-of-charge phase when detecting that the battery capacity reaches the first capacity threshold.

Taking the battery capacity being the SOC as an example, the first capacity threshold may be 98%, and when the battery capacity reaches 98% SOC, it is determined that the battery of the electrical device reaches the end-of-charge phase protection condition.

It should be noted that the value of the first capacity threshold may be different when the rated capacity of the battery is different, and the specific value of the first capacity threshold may be determined by an experiment or may be determined according to the rated capacity of the battery.

In the charging method provided in the embodiment of the present application, when the battery voltage of the battery reaches the first voltage threshold, it is determined that the battery reaches the end-of-charge phase, and/or when the battery capacity of the battery reaches the first capacity threshold, it is determined that the battery reaches the end-of-charge phase. In the method, since the battery voltage will gradually increase during the charging process of the battery, whether battery charge enters the end-of-charge phase can be accurately determined by determining whether the battery voltage reaches the first voltage threshold as whether the battery reaches an end-of-charge phase protection condition, thereby improving the accuracy and reliability of charging the battery during the end-of-charge phase. In addition, by taking the battery capacity as an indicator, whether the battery reaches the end-of-charge phase protection condition can be more intuitively and accurately judged, thereby improving the accuracy and reliability of charging the battery during the end-of-charge phase.

When the battery reaches the end-of-charge phase, the charging mode of the battery during the end-of-charge phase is determined. In an exemplary embodiment, as shown in FIG. 4, acquiring the charging mode of the battery during the end-of-charge phase includes the following steps:
S401, response information of the charging pile is acquired.

The response information of the charging pile may include maximum output power, maximum output current, current output power, a currently outputted current, and the like that are supported by the charging pile.

During a process in which the charging pile interacts with the battery, the charging pile may send the response information of the charging pile to the battery management system in real time, and the battery management system may directly receive the response information of the charging pile sent by the charging pile.

S402, a response speed of the charging pile is determined according to the response information of the charging pile.

The response speed of the charging pile may reflect a response time of the charging pile to a request of the battery management system, and it may represent a time required for the charging pile to start to execute the corresponding request after the battery management system sends the request to the charging pile.

The response information of the charging pile may include a response speed of the charging pile, and therefore, the response speed of the charging pile may be directly acquired from the response information.

In some embodiments, the response speed of the charging pile may also be determined according to the information included in the response information of the charging pile. In an exemplary embodiment, as shown in FIG. 5, determining the response speed of the charging pile according to the response information of the charging pile includes the following steps.

S501, a first moment at which the historical electrical parameter value is sent to the charging pile and a second moment at which the battery is charged with the target electrical parameter by the charging pile are acquired according to the response information of the charging pile.

An absolute value of a difference between the historical electrical parameter and the target electrical parameter is less than a preset difference threshold.

The historical electrical parameter value is an electrical parameter value that is determined by the battery management system at a historical moment and required for charging the battery, the historical electrical parameter value is sent to the charging pile, and the battery management system determines a moment at which the historical electrical parameter value is sent to the charging pile as the first moment.

The charging pile responds to the historical electrical parameter value and then charges the battery on the basis of the historical electrical parameter value, but the actual electrical parameter outputted by the charging pile in the early stage of charging the battery with the historical electrical parameter is unstable, and the charging pile may charge the battery with a parameter value lower or higher than the historical electrical parameter, so that the battery management system may detect the moment in real time when the charging pile charges the battery with the target electrical parameter value, and determine the moment when the battery is charged with the target electrical parameter value as the second moment, where the target electrical parameter may be an electrical parameter interval, for example, the battery management system sends a current value of 1A to the charging pile, and the target electrical parameter may be a current value of 0.9 A to 1.1A, that is, the moment when the battery sends the current value of 1A to the charging pile is determined as the first moment, and the time when it is detected that the battery is charged with the current value between 0.9 A and 1.1A is determined as the second moment.

In some embodiments, the second moment may also be a moment at which the charging pile charges the battery stably with the target electrical parameter, that is, the second moment is a moment at which the target electrical parameter outputted by the charging pile is stable and approaches to the historical electrical parameter value; for example, the battery management system sends a current value of 1A to the charging pile, and the target electrical parameter may be a current value of 0.9 A to 1.1A, that is, a moment at which the current value of 1A is sent to the charging pile is determined as the first moment, and a moment at which the battery is charged at a current value between 0.9 A and 1.1A within the preset duration is determined as the second moment.

S502, a duration at which the charging pile charges the battery is determined according to the first moment and the second moment.

A time interval between the second moment and the first moment is determined as the duration for charging the battery by the charging pile. The duration may be represented as a duration at which the charging pile executes and stably outputs the electrical parameter value after the battery management system sends the electrical parameter value to the charging pile, that is, a duration at which the charging pile responds to the electrical parameter value sent by the battery management system.

S503, the response speed of the charging pile is determined according to the duration.

The longer the duration, the slower the response speed of the charging pile, and the shorter the duration, the faster the response speed of the charging pile. Therefore, the response speed of the charging pile may be determined according to the duration.

The response speed of the charging pile may be directly represented by a reciprocal of the duration, that is, the reciprocal of the duration is determined as the response speed of the charging pile.

In some embodiments, the duration may also be substituted into a preset response speed calculation formula, and a calculation result of the response speed calculation formula is determined as the response speed of the charging pile.

In the embodiment of the present application, the first moment at which the historical electrical parameter value is sent to the charging pile and the second moment at which the battery is charged by the charging pile with the target electrical parameter are acquired according to the response information of the charging pile, where an absolute value of a difference between the historical electrical parameter and the target electrical parameter is less than a preset difference threshold; and then the duration of charging the battery by the charging pile is determined according to the first moment and the second moment, and finally the response speed of the charging pile is determined according to the duration. In this embodiment, the charging pile needs to process the electrical parameter value sent by a battery management system, and therefore, the response speed of the charging pile is determined by evaluating the duration of the charging pile responding to the electrical parameter value requested by the battery management system, thereby improving the accuracy of the response speed of the charging pile, making the subsequently determined charging mode of the battery during the end-of-charge phase more reliable.

S403, a charging mode of the battery during the end-of-charge phase is determined according to the response speed of the charging pile.

In an embodiment, determining the charging mode of the battery during the end-of-charge phase according to the response speed of the charging pile includes determining the charging mode of the battery during the end-of-charge phase as constant power charging when the response speed of the charging pile is greater than a preset speed threshold.

That is, when the response speed of the charging pile is greater than the preset speed threshold, the battery may be charged during the end-of-charge phase of the battery in a charging mode of constant power charging.

In this embodiment, because constant power charging is an efficient charging mode, the battery is charged at a constant power when the charging pile has a relatively fast response speed, so that the charging pile can maintain the charging stability relatively quickly, thereby improving the charging efficiency of the battery during the end-of-charge phase.

It should be noted that the preset speed threshold may be determined according to an actual situation or a charging test.

In the charging method provided in the embodiment of the present application, the response information of the charging pile is acquired, the response speed of the charging pile is determined according to the response information of the charging pile, and then the charging mode of the battery during the end-of-charge phase is determined according to the response speed of the charging pile. In this method, since the response speed reflects the speed at which the charging pile charges the battery through the received electrical parameter value, the charging mode of the battery during the end-of-charge phase is determined through the response speed of the charging pile, and a suitable charging mode can be selected for the battery during the end-of-charge phase, so as to increase the charging speed of the battery during the end-of-charge phase to the maximum extend and shorten the charging duration.

In the above embodiment, the charging mode of the battery during the end-of-charge phase is determined through the response information of the charging pile, and in actual cases, the charging mode of the battery during the end-of-charge phase may also be determined through the status information of the battery. A specific process of determining the charging mode of the battery during the end-of-charge phase according to the current status information of the battery will be described below through an embodiment.

In the above embodiment, the charging mode of the battery during the end-of-charge phase is determined through the response speed of the charging pile, and an implementation of determining the charging mode of the battery through the characteristic information of the battery will be described below through an embodiment, and in an exemplary embodiment, as shown in FIG. 6, acquiring the charging mode of the battery during the end-of-charge phase includes the following steps:
S601, characteristic information of the battery is acquired.

The characteristic information of the battery may include status information such as a current, a voltage, and a temperature of the battery, and may also include attribute information such as a charging characteristic and a temperature characteristic of the battery during the end-of-charge phase, and a battery type.

The battery management system may collect the status information of the battery in real time through a status sensor, and the attribute information of the battery may be pre-calibrated before the battery is charged and pre-stored in the battery management system, or the attribute information of the battery may be directly acquired from a storage library of the battery management system.

S602, the charging mode of the battery during the end-of-charge phase is determined according to the characteristic information of the battery.

During the charging process of the battery, the charging capability of the battery at a too high temperature will be reduced. Therefore, a proper charging mode may be selected for the battery during the end-of-charge phase on the basis of the battery temperature, so that the charging capability of the battery during the end-of-charge phase can be maximized, and the charging speed of the battery during the end-of-charge phase can be improved.

Therefore, when the characteristic information includes the current temperature of the battery, determining the charging mode of the battery during the end-of-charge phase according to the characteristic information of the battery includes: when the current temperature of the battery is greater than a preset temperature threshold, determining that the charging mode of the battery during the end-of-charge phase is constant voltage charging.

That is, when the current temperature of the battery is greater than the preset temperature threshold, the battery may be charged during the end-of-charge phase of the battery in a charging mode of constant voltage charging. It should be noted that the preset temperature threshold may be determined according to an actual situation or a charging test.

In this embodiment, the temperature of the battery is greater than the preset temperature threshold, which indicates that the temperature of the battery at the end-of-charge phase is too high, at this time, the temperature of the battery should be gradually reduced during charging at the end-of-charge phase, and in the process of the battery being reduced from a high temperature to a normal temperature, the battery response characteristic has a large change, which is not conducive to control, and the use of the constant voltage charging mode can minimize the influence of the change of the response characteristic on the battery, thereby improving the reliability of charging the battery at the end-of-charge phase while reducing the charging duration at the end-of-charge phase of the battery.

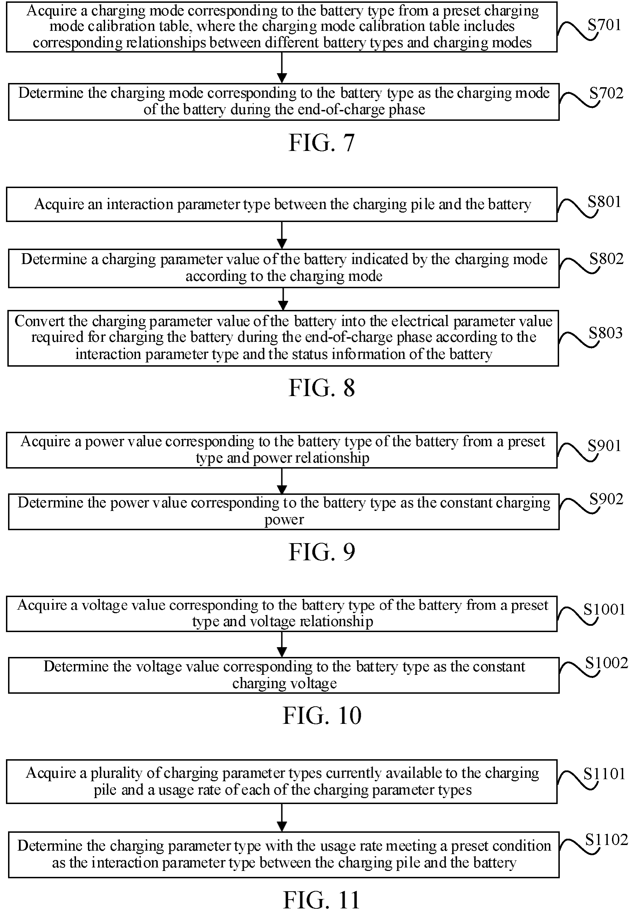

When the characteristic information includes the battery type, in an exemplary embodiment, as shown in FIG. 7, determining the charging mode of the battery during the end-of-charge phase according to the characteristic information of the battery includes the following steps:
S701, a charging mode corresponding to the battery type is acquired from a preset charging mode calibration table, where the charging mode calibration table includes corresponding relationships between different battery types and charging modes.

The type of the battery may also be stored in the battery management system in advance, and when the charging mode of the battery during the end-of-charge phase is obtained, the battery management system may directly acquire the battery type of the battery, and acquire the charging mode corresponding to the battery type from the preset charging mode calibration table.

The charging mode calibration table includes corresponding relationships between different battery types and charging modes, and the charging modes of the batteries with different types during the end-of-charge phase may be different.

A process of constructing the charging mode calibration table may be as follows: the charging mode of each battery during the end-of-charge phase is determined according to the charging capability of each battery during the end-of-charge phase, the type corresponding to each battery is associated with the charging mode to obtain corresponding relationships between different battery types and charging modes, and the charging mode calibration table is constructed according to the corresponding relationships between different battery types and charging modes.

It should be noted that the charging mode corresponding to the battery may be determined according to the charging capability of the battery during the end-of-charge phase, the battery may include various types of batteries, each type of battery includes various types, and even if the battery types are the same, the charging capabilities of the batteries during the end-of-charge phase may be different, and therefore, the charging mode of the battery during the end-of-charge phase may be determined according to the battery type of the battery.

S702, the charging mode corresponding to the battery type is determined as the charging mode of the battery during the end-of-charge phase.

The charging mode corresponding to the battery type acquired from the charging mode calibration table is determined as the charging mode of the battery during the end-of-charge phase.

The charging mode may include constant power charging, constant voltage charging, or a charging mode combining constant voltage and constant power; for example, the charging mode combining constant voltage and constant power may include: during the battery end-of-charge phase, the constant voltage charging is performed first and then the constant power charging is performed, or the constant power charging is first performed first and then the constant voltage charging is performed.

In the charging method provided in embodiment of the present application, the charging mode corresponding to the battery type is acquired from the preset charging mode calibration table, and the charging mode corresponding to the battery type is determined as the charging mode of the battery during the end-of-charge phase, where the charging mode calibration table includes corresponding relationships between different battery types and charging modes. In this method, by pre-calibrating the corresponding relationships between different battery types and charging modes, the optimal charging mode of the battery during the end-of-charge phase is directly determined by using the charging mode calibration table, thereby simplifying the process of determining the charging mode of the battery during the end-of-charge phase, and increasing the response speed of charging the battery by using the charging mode during the end-of-charge phase.

In the charging method provided in the embodiment of the present application, characteristic information of the battery is acquired, and the charging mode of the battery during the end-of-charge phase is determined according to the characteristic information of the battery. In this method, since the characteristic information represents the status and charging characteristics of the battery, the charging mode of the battery during the end-of-charge phase is determined according to the characteristic information of the battery, and the charging capability of the battery during the end-of-charge phase can be fully exerted through the determined charging mode, thereby increasing the charging rate of the battery during the end-of-charge phase and shortening the charging duration of the battery during the end-of-charge phase.

In the above embodiment, it is described that during the battery end-of-charge phase, the charging mode of constant power charging is used to charge the battery when the response speed of the charging pile is greater than the preset speed threshold, and the charging mode of constant voltage charging is used when the current temperature of the battery is greater than the preset temperature threshold, and the case where both of the above two cases are satisfied or not satisfied will be described below through an embodiment.

In an exemplary embodiment, when the response speed of the charging pile is greater than the preset speed threshold and the current temperature of the battery is greater than the preset temperature threshold, or when the response speed of the charging pile is less than or equal to the preset speed threshold and the current temperature of the battery is less than or equal to the preset temperature threshold, the priorities of the charging modes of the constant power charging and the constant voltage charging may be preset, and the charging mode with a higher priority is used as the corresponding charging mode.

For example, when the response speed of the charging pile is greater than the preset speed threshold and the current temperature of the battery is greater than the preset temperature threshold, it is determined that the charging mode of the battery during the end-of-charge phase is the constant voltage charging; and when the response speed of the charging pile is less than or equal to the preset temperature threshold and the current temperature of the battery is less than or equal to the preset temperature threshold, it is determined that the charging mode of the battery during the end-of-charge phase is the constant power charging.

It should be noted that in the embodiment of the present application, a specific charging mode determined by using the priority may be further determined according to a charging test or an actual requirement.

The above embodiments are all described with respect to how to acquire the charging mode of the battery during the end-of-charge phase, and the following describes how to determine the real-time electrical parameter value required for charging the battery during the end-of-charge phase. In an exemplary embodiment, as shown in FIG. 8, determining the electrical parameter value required for charging the battery during the end-of-charge phase on the basis of the charging mode and the status information of the battery includes the following steps:
S801, an interaction parameter type between the charging pile and the battery is acquired.

The interaction parameter type between the charging pile and the battery may include current, voltage and/or power. For example, if the charging pile responds to a current value sent by the battery management system, the interaction parameter type between the charging pile and the battery is a current; if the charging pile responds to a voltage value sent by the battery management system, the interaction parameter type between the charging pile and the battery is a voltage; and if the charging pile responds to a power value sent by the battery management system, the interaction parameter type between the charging pile and the battery is power.

Acquiring the interaction parameter type between the charging pile and the battery may be as follows: before the charging pile charges the battery, the charging pile sends the response parameter type of the charging pile to the battery management system, that is, the interaction parameter type between the charging pile and the battery.

The mode of acquiring the interaction parameter type between the charging pile and the battery may also be acquiring a sending parameter type sent by the battery management system to the charging pile, and determining the sending parameter type as the interaction parameter type between the charging pile and the battery.

S802, a charging parameter value of the battery indicated by the charging mode is determined according to the charging mode.

The charging parameter value of the battery indicated by the charging mode may represent that the battery is charged by using the charging parameter value of the battery in the charging mode.

Taking the charging mode being the constant power charging for description, when the charging mode is the constant power charging, the charging electrical value of the battery indicated by the charging mode is the constant charging power; in an exemplary embodiment, as shown in FIG. 9, determining, according to the charging mode, the charging parameter value of the battery indicated by the charging mode includes the following steps:
S901, a power value corresponding to the battery type of the battery is acquired from a preset type power relationship.

The type power relationship includes corresponding relationships between different battery types and power values, and the power values in the type power relationship may represent the charging power required by the battery of the corresponding battery type during the end-of-charge phase.

Therefore, when the charging mode of the end-of-charge phase of the battery is the constant power charging, the power values corresponding to the battery types of the battery may be obtained from the preset type power relationship.

The power value required by the corresponding battery during the end-of-charge phase may be determined by performing charging tests on batteries with different battery types during the end-of-charge phase, and the types and power values corresponding to the batteries are associated to obtain corresponding relationships between different types and power values, and a type power relationship is constructed according to the corresponding relationships between different types and power values; and the power values corresponding to the batteries may be determined according to the charging capabilities of the batteries during the end-of-charge phase.

The power value corresponding to the battery may be acceptable full charge cut-off power of the battery during the end-of-charge phase; continuing to use FIG. 1 as an example for description, the acceptable full charge cut-off power of the battery during the charging process during the end-of-charge is 3.65×0.1 × 101=36.865 watts, and therefore, the power value corresponding to the LFP battery may be determined as 36.865 watts.

S902, the power value corresponding to the battery type is determined as the constant charging power.

The power value corresponding to the battery type is determined as the constant charging power, the constant charging power is the constant charging power during the end-of-charge phase of the battery, and the battery may be charged during the battery end-of-charge phase with the constant charging power.

For example, the battery is charged during the battery end-of-charge phase by using charging power of 36.865 watts, and the electric quantity of 5.9 watt hours needs to be charged during the end-of-charge phase, so that it takes 576 seconds to charge 5.9 watt hours by using the constant charging power, and compared with a mode of charging the battery during the end-of-charge phase by using a small current of 0.1C, a time is saved by 12%.

In the embodiment of the present application, the power value corresponding to the battery type of the battery is acquired from a preset type power relationship, and the power value corresponding to the battery type is determined as the constant charging power, where the type power relationship includes corresponding relationships between different battery types and the power values. In this method, the constant charging power of the battery in the constant power charging mode is determined by the pre-calibrating mode, so that the flow of calculating the constant charging power is simplified, and the charging efficiency is improved; moreover, the constant charging power is the full charging cut-off power, and the charging current is dynamically adjusted by charging the battery during the end-of-charge phase of the battery through the full charging cut-off power, so that the charging rate of the end-of-charge phase of the battery can be increased without damaging the battery, thereby shortening the charging duration of the end-of-charge phase.

Taking the charging mode being the constant voltage charging for description, when the charging mode is the constant voltage charging, the charging electrical value of the battery indicated by the charging mode is the constant charging voltage; in an exemplary embodiment, as shown in FIG. 10, determining, according to the charging mode, the charging parameter value of the battery indicated by the charging mode includes the following steps:
S1001, a voltage value corresponding to the battery type of the battery is acquired from a preset type voltage relationship.

The type voltage relationship includes corresponding relationships between different battery types and voltage values.

The type voltage relationship includes corresponding relationships between different types and voltage values, and the voltage value in the type voltage relationship may represent the charging voltage required by the battery of the corresponding battery type during the end-of-charge phase.

Therefore, when the charging mode of the end-of-charge phase of the battery is the constant voltage charging, the voltage values corresponding to the battery types of the battery may be obtained from the preset type power relationship.

The voltage value required by the corresponding battery during the end-of-charge phase may be determined by performing charging tests on batteries with different battery types during the end-of-charge phase, and the types and voltage values corresponding to the batteries are associated to obtain corresponding relationships between different battery types and power values, and a type voltage relationship is constructed according to the corresponding relationships between different types and voltage values; and the voltage value corresponding to the battery may be the full charge cut-off voltage of the battery.

S1002, the voltage value corresponding to the battery type is determined as the constant charging voltage.

The voltage value corresponding to the battery type is determined as the constant charging voltage, the constant charging voltage is the constant charging voltage during the end-of-charge phase of the battery, and the battery may be charged during the battery end-of-charge phase with the constant charging voltage.

In the embodiment of the present application, the voltage value corresponding to the battery type of the battery is acquired from the preset type voltage relationship, and the voltage value corresponding to the battery type is determined as the constant charging voltage, where the type voltage relationship includes corresponding relationships between different battery types and voltage values. In this embodiment, the constant charging voltage of the battery in the constant voltage charging mode is determined by the pre-calibrating mode, so that the flow of calculating the constant charging voltage is simplified, and the charging efficiency is improved; moreover, the constant charging voltage may be full charging cut-off voltage, and the charging current is dynamically adjusted by charging the battery during the end-of-charge phase of the battery through the full charging cut-off voltage, so that the charging rate of the end-of-charge phase of the battery can be increased without damaging the battery, thereby shortening the charging duration of the end-of-charge phase.

S803, the charging parameter value of the battery is converted into the electrical parameter value required for charging the battery during the end-of-charge phase according to the interaction parameter type and the status information of the battery.

The parameter type of the electrical parameter value may be an interaction parameter type, and the battery may be charged by using the electrical parameter value required by the battery during the end-of-charge phase. The status information of the battery may be status information corresponding to the moment at which the electrical parameter value required by the battery during the end-of-charge phase is calculated. When the battery is at different charging moments during the end-of-charge phase, the status information of the battery changes, and the electrical parameter value required by the battery may also change.

The parameter value of charging of the battery may be converted into the electric parameter value required for charging the battery during the end-of-charge phase through a preset parameter type conversion model; specifically, the interaction parameter type, the status information of the battery, and the charging parameter value of the battery are inputted into the parameter type conversion model, the charging parameter value of the battery is converted on the basis of the interaction parameter type and the status information by using the parameter type conversion model, the electrical parameter value is outputted, and the electrical parameter value outputted by the parameter type conversion model is determined as the electrical parameter value required for charging the battery during the end-of-charge phase.

In the charging method provided in the embodiment of the present application, an interaction parameter type between the charging pile and the battery is acquired first, the charging parameter value of the battery indicated by the charging mode is determined according to the charging mode, and the charging parameter value of the battery is converted into a real-time electrical parameter value required for charging the battery during the end-of-charge phase according to the interactive parameter type and the status information of the battery. In this method, the charging mode may represent a mode by which the battery is charged. The status information of the battery may represent a real-time status of the battery. The interaction parameter type may represent an interactive mode between the charging pile and the battery. Therefore, the charging parameter value of the battery indicated by the charging mode can be determined according to the charging mode, so that the charging parameter value of the battery is more reliable; moreover, the charging parameter value of the battery is converted into the electrical parameter value required by the battery according to the interaction parameter type between the charging pile and the battery and the status information of the battery, so that the charging process of the battery during the end-of-charge phase can be accurately controlled, the charging current of the battery during the end-of-charge phase can be dynamically adjusted, the charging capability of the battery at each moment of the end-of-charge phase can be maximized, the charging speed of the battery during the end-of-charge phase can be increased, and the charging duration of the battery during the end-of-charge phase can be shortened.

In an exemplary embodiment, as shown in FIG. 11, acquiring the interaction parameter type between the charging pile and the battery may include the following steps:
S1101, a plurality of charging parameter types currently available to the charging pile and a usage rate of each of the charging parameter types are acquired.

The charging parameter type of the charging pile may represent that the charging pile can charge the battery with the parameter type, the charging parameter type may include a current, a voltage, and/or a power, and the usage rate of the charging parameter type may represent a frequency at which the charging pile charges the battery by using the corresponding charging parameter type when the battery is charged.

The battery management system may interact with the charging pile and send an acquisition request to the charging pile, and the charging pile sends the currently available charging parameter type and the usage rate of the charging parameter type to the battery management system.

S1102, the charging parameter type with the usage rate meeting a preset condition is determined as the interaction parameter type between the charging pile and the battery.

The preset condition may include a highest usage rate, a lowest usage rate, or a usage rate greater than a preset usage rate threshold.

The charging parameter type with the highest usage rate in the charging pile may be determined as the interaction parameter type between the charging pile and the battery; for example, if the charging parameter type currently available to the charging pile is current and voltage, and the current charging usage rate is greater than the voltage charging usage rate, the current is used as the charging parameter type between the charging pile and the battery, that is, the charging pile and the battery interact with each other through the current, the battery management system sends the current value required by the battery to the charging pile, and the charging pile charges the battery with the current value.

The charging parameter type with the lowest usage rate in the charging pile may be determined as the interaction parameter type between the charging pile and the battery; for example, if the charging parameter type currently available to the charging pile is voltage and current, and the power charging usage rate is greater than the voltage charging usage rate, the voltage is used as the charging parameter type between the charging pile and the battery, that is, the charging pile and the battery interact with each other through the voltage, the battery management system sends the voltage value required by the battery to the charging pile, and the charging pile charges the battery with the voltage value.

It should be noted that if a plurality of charging parameter types that meet the preset condition are included, the interaction parameter type between the charging pile and the battery may be determined from the plurality of charging parameter types that meet the preset condition according to the priorities of the charging parameter types.

In the charging method provided in the embodiment of the present application, the plurality of charging parameter types currently available to the charging pile and the usage rates of the charging parameter types are acquired, and the charging parameter type with the usage rate meeting a preset condition is determined as the interaction parameter type between the charging pile and the battery. In this method, the preset condition may be set by a user in advance. Therefore, by selecting the charging parameter type with the usage rate meeting a preset condition as the interaction parameter type between the charging pile and the battery, the charging experience and charging efficiency of the user can be improved.

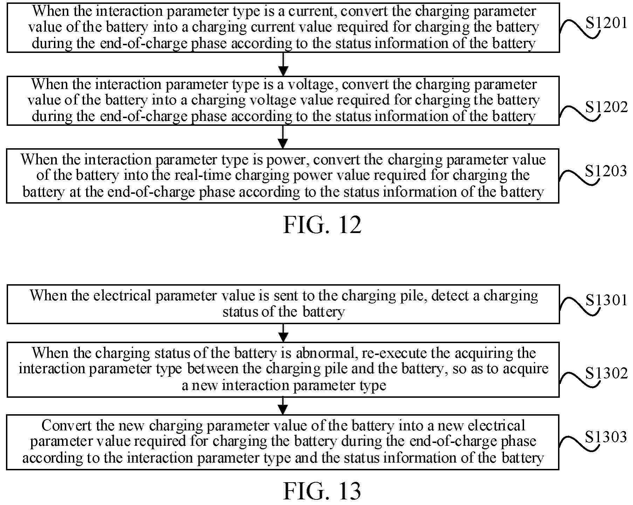

In an exemplary embodiment, as shown in FIG. 12, converting the charging parameter value of the battery into the electrical parameter value required for charging the battery during the end-of-charge phase according to the interaction parameter type and the status information of the battery includes the following steps:
S1201, when the interaction parameter type is a current, the charging parameter value of the battery is converted into a charging current value required for charging the battery during the end-of-charge phase according to the status information of the battery.

If the interaction parameter type is the current, it may represent that the charging pile responds to a current signal, and therefore, when interacting with the charging pile, the battery management system needs to send a current value to the charging pile, and the charging pile responds to the current value sent by the battery management system, and charges the battery by using the received current value.

Therefore, if the interaction parameter type is the current, the electrical parameter value should be a charging current value. When the interaction parameter type is a current converting the charging parameter value of the battery into a charging current value required for charging the battery during the end-of-charge phase according to the status information of the battery.

On the basis of the above embodiments, it may be known that the charging mode includes constant power charging and constant voltage charging, and correspondingly, the charging parameter value of the battery may include constant charging power and a constant charging voltage.

Specifically, when the charging parameter value of the battery is the constant charging power, the constant charging power is converted into the charging current value required by the battery during the end-of-charge phase according to the status information of the battery. For example, the status information of the battery may include a charging voltage of the battery, and a ratio of the constant charging power to the charging voltage of the battery may be determined as the charging current of the battery, that is, the charging current value required for charging the battery during the end-of-charge phase; and the mode of determining the charging current value may be as follows: after the ratio of the constant charging power to the charging voltage of the battery is obtained, determining the sum of the ratio and the preset current compensation value as the charging current value required for charging the battery during the end-of-charge phase.

When the charging parameter value of the battery is the constant charging voltage, the constant charging voltage is converted into the charging current value required by the battery during the end-of-charge phase according to the status information of the battery. For example, the status information and the constant charging voltage of the battery are inputted into a preset control algorithm, and the charging current value required by the battery during the end-of-charge phase is outputted. The control algorithm uses the charging voltage and the status information of the battery as inputs, and uses the current as an output, and the control algorithm may be a control algorithm for performing control by using a proportional integral derivative (PID), and the status information of the battery may include information such as a capacity of the battery.

In the embodiment of the present application, when the interaction parameter type is the current, the battery charging parameter is converted into the charging parameter value, and the charging current value is sent to the charging pile, so that the interactive effectiveness with the charging pile is improved; moreover, because the status information of the battery can reflect a current status of the battery and the charging current value determined with the current status information of the battery, the charging capability of the battery during the end-of-charge phase can fully exerted, and the charging speed of the battery during the end-of-charge phase can be increased, thereby shortening the charging duration of the battery during the end-of-charge phase.

S1202, when the interaction parameter type is a voltage, the charging parameter value of the battery is converted into a charging voltage value required for charging the battery during the end-of-charge phase according to the status information of the battery.

If the interaction parameter type is the voltage, it may represent that the charging pile responds to a voltage signal, and therefore, when interacting with the charging pile, the battery management system needs to send a voltage value to the charging pile, and the charging pile responds to the voltage value sent by the battery management system, and charges the battery by using the received voltage value.

Therefore, if the interaction parameter type is the voltage, the electrical parameter value should be a charging voltage value. When the interaction parameter type is a voltage converting the charging parameter value of the battery into a charging voltage value required for charging the battery during the end-of-charge phase according to the status information of the battery.

On the basis of the above embodiments, it may be known that the charging mode includes constant power charging and constant voltage charging, and correspondingly, the charging parameter value of the battery may include constant charging power and a constant charging voltage.

Specifically, when the charging parameter value of the battery is the constant charging power, the constant charging power is converted into the charging voltage value required by the battery during the end-of-charge phase according to the status information of the battery. For example, the status information of the battery may include a charging current of the battery, and a ratio of the constant charging power to the charging current of the battery may be determined as the charging voltage of the battery, that is, the charging voltage value required for charging the battery during the end-of-charge phase; and the mode of determining the charging voltage value may be as follows: after the ratio of the constant charging voltage to the charging current of the battery is obtained, determining the sum of the ratio and the preset current compensation value as the charging voltage value required for charging the battery during the end-of-charge phase.

When the charging parameter value of the battery is the constant charging voltage, the constant charging voltage of the battery may be directly determined as the charging voltage value required for charging the battery during the end-of-charge phase, or a real-time voltage compensation value of the battery charged with the constant charging voltage may be determined according to the status information of the battery, and the sum of the real-time voltage compensation value and the constant charging voltage may be determined as the charging voltage value required for charging the battery during the end-of-charge phase.

The status information of the battery may be substituted into a voltage compensation algorithm to obtain the real-time voltage compensation value, where the status information of the battery may include information such as a temperature and a capacity of the battery.

In the embodiment of the present application, when the interaction parameter type is the voltage, the battery charging parameter is converted into the charging voltage value, and the charging voltage value is sent to the charging pile, so that the interactive effectiveness with the charging pile is improved; moreover, because the status information of the battery can reflect a current status of the battery and the charging voltage value determined with the current status information of the battery, the charging capability of the battery during the end-of-charge phase can fully exerted, and the charging speed of the battery during the end-of-charge phase can be increased, thereby shortening the charging duration of the battery during the end-of-charge phase.

S1203, when the interaction parameter type is power, the charging parameter value of the battery is converted into the charging power value required for charging the battery at the end-of-charge phase according to the status information of the battery.

If the interaction parameter type is the power, it may represent that the charging pile responds to a power signal, and therefore, when interacting with the charging pile, the battery management system needs to send a power value to the charging pile, and the charging pile responds to the power value sent by the battery management system, and charges the battery by using the received power value.

Therefore, if the interaction parameter type is the power, the real-time electrical parameter value is the charging power value. When the interaction parameter type is the power, the charging parameter value of the battery is converted into the charging power value required for charging the battery at the end-of-charge phase according to the status information of the battery.

On the basis of the above embodiments, it may be known that the charging mode includes constant power charging and constant voltage charging, and correspondingly, the charging parameter value of the battery may include constant charging power and a constant charging voltage.

Specifically, when the charging parameter value of the battery is the constant charging power, the constant charging power of the battery may be directly determined as the charging power value required for charging the battery during the end-of-charge phase, or a real-time voltage compensation value of the battery charged with the constant charging power may be determined according to the status information of the battery, and the sum of the real-time power compensation value and the constant charging power may be determined as the charging power value required for charging the battery during the end-of-charge phase.

The status information of the battery may be substituted into a power compensation algorithm to obtain the real-time power compensation value, where the status information of the battery may include information such as a temperature and a capacity of the battery.

In the embodiment of the present application, when the interaction parameter type is the power, the battery charging parameter is converted into the charging power value, and the charging power value is sent to the charging pile, so that the interactive effectiveness with the charging pile is improved; moreover, because the status information of the battery can reflect a current status of the battery and the charging power value determined with the current status information of the battery, the charging capability of the battery during the end-of-charge phase can fully exerted, and the charging speed of the battery during the end-of-charge phase can be increased, thereby shortening the charging duration of the battery during the end-of-charge phase.

In the charging method provided in the embodiment of the present application, in the case where the interaction parameter type is current, the charging parameter value of the battery is converted into the charging current value required for charging the battery at the end-of-charge phase according to the status information of the battery, in the case where the interaction parameter type is voltage, the charging parameter value of the battery is converted into the charging voltage value required for charging the battery at the end-of-charge phase according to the status information of the battery, and in the case where the interaction parameter type is power, the charging parameter value of the battery is converted into the real-time charging power value required for charging the battery at the end-of-charge phase according to the status information of the battery. In this method, the battery charging parameter is converted into the charging parameter value required by the battery and the charging parameter value corresponding to the charging parameter type of the battery is sent to the charging pile, so that the interactive effectiveness with the charging pile is improved; moreover, because the status information of the battery can reflect a current status of the battery and the charging parameter value determined with the current status information of the battery, the charging capability of the battery during the end-of-charge phase can fully exerted, and the charging speed of the battery during the end-of-charge phase can be increased, thereby shortening the charging duration of the battery during the end-of-charge phase.

In an exemplary embodiment, as shown in FIG. 13, this embodiment includes the following steps:
S1301, when the electrical parameter value is sent to the charging pile, a charging status of the battery is detected.

After the electrical parameter value is sent to the charging pile, the battery management system may detect the charging state of the battery, that is, may detect whether the battery is charged with the electrical parameter value.

When it is detected that the battery is charged with the electrical parameter value, it is determined that the charging status of the battery is normal; and when it is detected that the battery is not charged with the electrical parameter value, it is determined that the charging status of the battery is abnormal.

It should be noted that considering a loss in the process of charging the battery by the charging pile, it may be determined that the battery is charged with the electrical parameter value when it is detected that the battery is charged with a candidate electrical parameter value, where the candidate electrical parameter value represents a value that fluctuates up and down with the electrical parameter value as a center.

S1302, when the charging status of the battery is abnormal, the acquiring the interaction parameter type between the charging pile and the battery is re-executed, so as to acquire a new interaction parameter type.

When the charging status of the battery is abnormal, the acquiring the interaction parameter type between the charging pile and the battery may be re-executed, so as to acquire a new interaction parameter type.

When the charging status of the battery is abnormal, it may be determined that the charging pile corresponding to the electrical parameter type is unavailable, the plurality of charging parameter types currently available to the charging pile and the usage rates of the charging parameter types may be acquired again, and the charging parameter type with the usage rate meeting a preset condition is determined as a new interaction parameter type between the charging pile and the battery.

It should be noted that in the embodiment of the present application, the principle of an implementation of acquiring the plurality of charging parameter types currently available to the charging pile and the usage rate of each available charging parameter type again, and determining the charging parameter type with the usage rate meeting the preset condition as the new interaction parameter type between the charging pile and the battery is the same as the principle of an implementation of acquiring the plurality of charging parameter types currently available to the charging pile and the usage rate of each charging parameter type, and determining the charging parameter type with the usage rate meeting the preset condition as the interaction parameter type between the charging pile and the battery in the above embodiment, and details are not described herein again in the embodiment of the present application.

S1303, the charging parameter value of the battery is converted into the electrical parameter value required for charging the battery during the end-of-charge phase according to the interaction parameter type and the status information of the battery.

In the embodiment of the present application, the implementation of converting the charging parameter value of the battery into the new electrical parameter value required for charging the battery during the end-of-charge phase according to the new interaction parameter type and the status information of the battery is the same as the implementation of converting the charging parameter value of the battery into the electrical parameter value required for charging the battery during the end-of-charge phase according to the interaction parameter type and the status information of the battery in the above embodiment, and details are not described herein again in the embodiment of the present application.

In the charging method provided in the embodiment of the present application, when the electrical parameter value is sent to the charging pile, the charging status of the battery is detected, and when the charging status of the battery is abnormal, the acquisition of the interaction parameter type between the charging pile and the battery is re-executed, a new interaction parameter type is acquired, and finally, the charging parameter value of the battery is converted into a new electrical parameter value required for charging the battery during the end-of-charge phase according to the new interaction parameter type and the status information of the battery. In this method, when the charging status of the battery is abnormal, the charging parameter type is re-acquired and the charging parameter value is converted, which may reduce the abnormal situation of the battery during the charging process, thereby protecting the safety and life of the battery.

In the process of charging the battery during the battery end-of-charge phase, the real-time electrical parameter value required for charging the battery during the end-of-charge phase is determined according to the charging mode of the battery during the end-of-charge phase and the real-time status information of the battery, and the real-time electrical parameter value is sent to the charging pile, so that the charging pile charges the battery through the real-time electrical parameter value, and if the battery does not reach the charging cut-off condition, the charging pile is controlled to charge the battery with the real-time electrical parameter value updated in real time until the battery reaches the charging cut-off condition, and the charging pile is controlled to stop charging the battery.

In an exemplary embodiment, the charging cut-off condition includes at least one of the following: the battery voltage of the battery reaches a second voltage threshold; and the battery capacity of the battery reaches a second capacity threshold.

In an optional embodiment, the battery management system determines that the battery of the electrical device reaches the charging cut-off condition when it is detected that the battery voltage of the battery reaches a second voltage threshold, where the second voltage threshold may be a charging cut-off voltage of the battery, and determines that the battery is fully charged when the voltage of the battery reaches the second voltage threshold.

If the battery is the LFP battery, the second voltage threshold may be 3.65V, and if the battery is the NCM battery, the second voltage threshold may be 4.3V.

It should be noted that values of the second voltage threshold may vary with different types of batteries, and a specific value of the second voltage threshold may be determined through an experiment or a charging capability of the battery.

In another optional embodiment, the battery management system determines that the battery of the electrical device reaches the charging cut-off condition in when it is detected that the battery capacity of the battery reaches a second capacity threshold, where if the battery capacity is the actual available electric quantity of the battery, the second capacity threshold may be the rated capacity of the battery, and if the battery capacity is represented by the SOC of the battery, the second capacity threshold may be 100% SOC.

In the charging method provided in the embodiment of the present application, the charging cut-off condition includes at least one of the following: the battery voltage of the battery reaches a second voltage threshold; and the battery capacity of the battery reaches a second capacity threshold. In this method, since the longer the charging duration of the battery, the higher the voltage, the battery voltage and/or the battery capacity are used as the determination indicators to judge whether the battery reaches the charging cut-off condition, which reduces the risks of overcharge, lithium precipitation, and the like during charging of the battery, and improves the safety and reliability of battery charging.

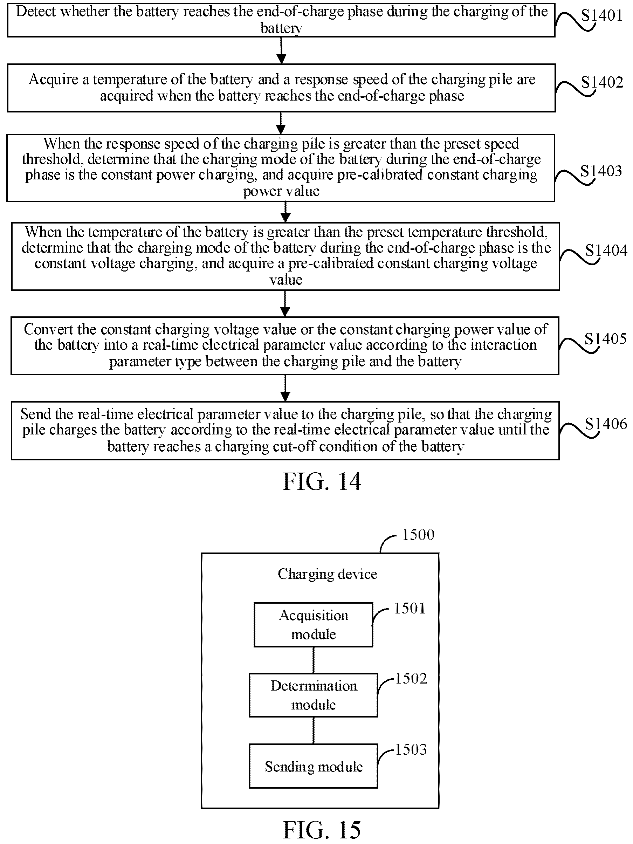

In an exemplary embodiment, an embodiment of the present application further provides a charging method, as shown in FIG. 14, the embodiment including the following steps:
S1401, it is detected whether the battery reaches an end-of-charge phase during the charging process of the battery.
   If the battery voltage of the battery reaches the first voltage threshold, it is determined that the battery reaches the end-of-charge phase; and if the battery voltage of the battery does not reach the first voltage threshold, it is determined that the battery does not reach the end-of-charge phase.
S1402, a temperature of the battery and a response speed of the charging pile are acquired when the battery reaches the end-of-charge phase.
S1403, when the response speed of the charging pile is greater than the preset speed threshold, it is determined that the charging mode of the battery during the end-of-charge phase is the constant power charging, and pre-calibrated constant charging power value is acquired.
S1404, when the temperature of the battery is greater than the preset temperature threshold, it is determined that the charging mode of the battery during the end-of-charge phase is the constant voltage charging, and a pre-calibrated constant charging voltage value is acquired.

It should be noted that when the response speed of the charging pile is greater than the preset speed threshold and the temperature of the battery is greater than the preset temperature threshold, or when the response speed of the charging pile is less than or equal to the preset speed threshold and the temperature of the battery is less than or equal to the preset temperature threshold, it is determined, by using the preset priority, that the charging mode of the battery during the end-of-charge phase is the constant power charging or the constant voltage charging.

S1405, the constant charging voltage value or the constant charging power value of the battery is converted into a real-time electrical parameter value according to the interaction parameter type between the charging pile and the battery.

The parameter type of the real-time charging parameter is an interaction parameter type; if the interaction parameter type is current, the real-time electrical parameter value is a real-time charging current value; if the interaction parameter type is voltage, the real-time electrical parameter value is a real-time charging voltage value; and if the interaction parameter type is power, the real-time electrical parameter value is a real-time charging power value.

S1406, the real-time electrical parameter value is sent to the charging pile, so that the charging pile charges the battery according to the real-time electrical parameter value until the battery reaches a charging cut-off condition of the battery.

If the battery voltage of the battery reaches a second voltage threshold, it is determined that the battery reaches the charging cut-off condition of the battery, where the second voltage threshold is greater than the first voltage threshold.

In the embodiment of the present application, the charging mode of the battery during the end-of-charge phase is preset to be constant power charging or constant voltage charging, the real-time electrical parameter value is determined according to the interaction parameter type with the charging pile, and the battery is charged by the charging pile according to the real-time electrical parameter value.

It should be understood that although the steps in the flowcharts involved in the above embodiments are sequentially displayed as indicated by the arrows, these steps are not necessarily performed in the order indicated by the arrows. Unless explicitly stated herein, the execution of these steps is not strictly limited in order, and these steps may be executed in other orders. Moreover, at least part of the steps in the flowcharts involved in the above embodiments may include a plurality of steps or a plurality of stages, these steps or stages are not necessarily performed at the same time, but may be performed at different times, and the execution order of these steps or stages is not necessarily performed sequentially, but may be performed in turn or alternately with at least part of the steps or stages in other steps or other steps.

On the basis of the same inventive concept, an embodiment of the present application further provides a charging apparatus configured to implement the charging method described above. The solution for solving the problem provided by the apparatus is similar to the solution described in the above method, so that the specific definition in one or more embodiments of the charging apparatus provided below may refer to the definition of the charging method described above, and will not be repeated here.

In an exemplary embodiment, as shown in FIG. 15, provided is a charging apparatus 1500, including an acquisition module 1501, a determining module 1502, and a sending module 1503.

The acquisition module 1501 is configured to, when a battery reaches an end-of-charge phase, acquire a charging mode of the battery during the end-of-charge phase, where in the charging mode, a charging current of the battery changes dynamically;
the determination module 1502 is configured to determine an electrical parameter value required for charging the battery during the end-of-charge phase on the basis of the charging mode and status information of the battery; and
the sending module 1503 is configured to send the electrical parameter value to a charging pile of the battery until a charging cut-off condition of the battery is reached.

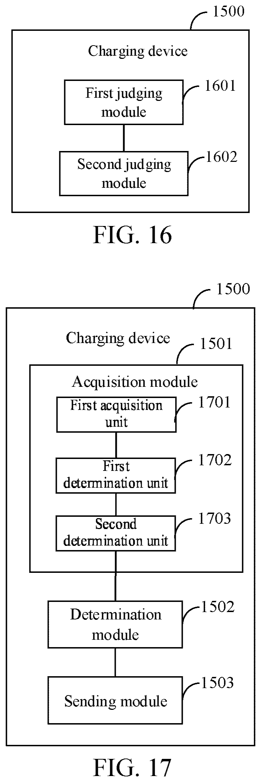

In an embodiment, as shown in FIG. 16, the apparatus 1500 further includes:
a first judging module 1602, configured to, when a battery voltage of the battery reaches a first voltage threshold, determine that the battery reaches the end-of-charge phase; and
a second determining module 1602, configured to, when the battery capacity of the battery reaches the first capacity threshold, determine that the battery reaches the end-of-charge phase.

In an embodiment, as shown in FIG. 17, the acquisition module 1501 includes:
a first acquisition unit 1701, configured to acquire response information of the charging pile;
a first determination unit 1702, configured to, according to the response information of the charging pile, determine a response speed of the charging pile; and
a second determination unit 1703, configured to, according to the response speed of the charging pile, determine a charging mode of the battery during the end-of-charge phase.

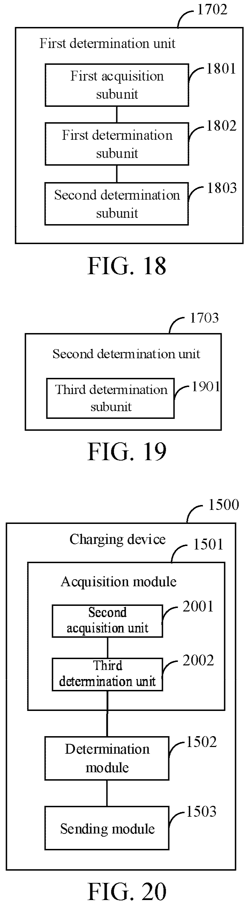

In an embodiment, as shown in FIG. 18, the first determination unit 1702 includes:
a first acquisition subunit 1801, configured to, according to the response information of the charging pile, acquire a first moment at which a historical electrical parameter value is sent to the charging pile and a second moment at which the battery is charged by the charging pile with a target electrical parameter, where an absolute value of a difference between the historical electrical parameter and the target electrical parameter is less than a preset difference threshold;
a first determination subunit 1802, configured to determine, according to the first moment and the second moment, a duration at which the charging pile charges the battery;
a second determination subunit 1803, configured to, according to the duration, determine the response speed of the charging pile.

In an embodiment, as shown in FIG. 19, the second determination unit 1703 includes:
a third determination subunit 1901, configured to, when the response speed of the charging pile is greater than a preset speed threshold, determine that the charging mode of the battery during the end-of-charge phase is constant power charging.

In an embodiment, as shown in FIG. 20, the acquisition module 1501 includes:
a second acquisition unit 2001, configured to acquire characteristic information of the battery;
a third determination unit 2002, configured to, according to the characteristic information of the battery, determine the charging mode of the battery during the end-of-charge phase.

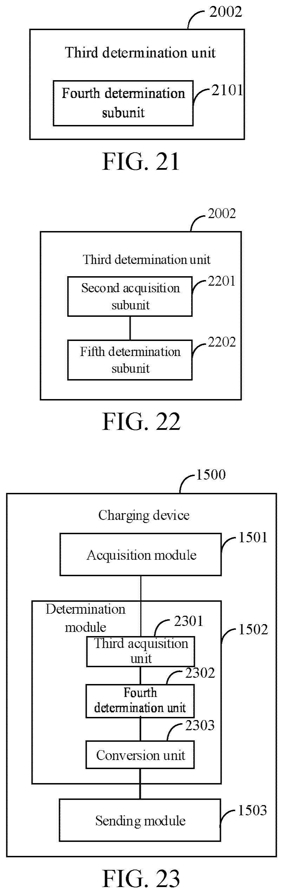

In an embodiment, as shown in FIG. 21, the characteristic information includes a current temperature of the battery, and the third determination unit 2002 includes:
a fourth determination subunit 2101, configured to, when the current temperature of the battery is greater than a preset temperature threshold, determine that the charging mode of the battery during the end-of-charge phase is constant voltage charging.

In an embodiment, as shown in FIG. 22, the characteristic information includes a battery type, and the third determination unit 2002 includes:
a second acquisition subunit 2201, configured to acquire a charging mode corresponding to the battery type from a preset charging mode calibration table, where the charging mode calibration table includes corresponding relationships between different battery types and charging modes; and
a fifth determination subunit 2202, configured to determine the charging mode corresponding to the battery type as the charging mode of the battery during the end-of-charge phase.

In an embodiment, as shown in FIG. 23, the determination module 1502 includes:
a third acquisition unit 2301, configured to acquire an interaction parameter type between the charging pile and the battery;
a fourth determination unit 2302, configured to determine, according to the charging mode, a charging parameter value of the battery indicated by the charging mode;
a conversion unit 2303, configured to, according to the interaction parameter type and the status information of the battery, convert the charging parameter value of the battery into the electrical parameter value required for charging the battery during the end-of-charge phase.

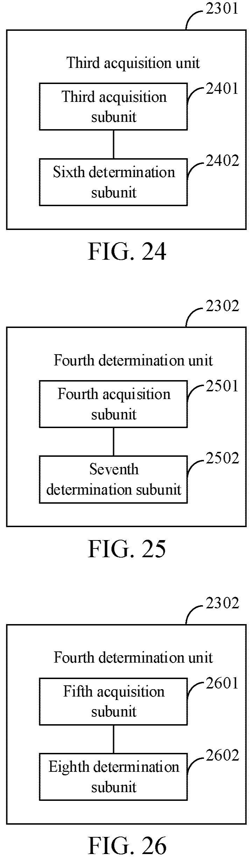

In an embodiment, as shown in FIG. 24, the third acquisition unit 2301 includes:
a third acquisition subunit 2401, configured to acquire a plurality of charging parameter types currently available to the charging pile and a usage rate of each of the charging parameter types; and
a sixth determination subunit 2402, configured to determine the charging parameter type with the usage rate meeting a preset condition as the interaction parameter type between the charging pile and the battery.
In an embodiment, as shown in FIG. 25, when the charging mode is constant power charging, the charging parameter value of the battery indicated by the charging mode is constant charging power, and the fourth determination unit 2302 includes:
a fourth acquisition subunit 2501, configured to acquire a power value corresponding to the battery type of the battery from a preset type and power relationship, where the type and power relationship comprises a plurality of corresponding relationships between different battery types and the power values; and
a seventh determination subunit 2502, configured to determine the power value corresponding to the battery type as the constant charging power.

In an embodiment, as shown in FIG. 26, when the charging mode is the constant voltage charging, the charging parameter value of the battery indicated by the charging mode is a constant charging voltage, and the fourth determination unit 2302 includes:
a fifth acquisition subunit 2601, configured to acquire a voltage value corresponding to the battery type of the battery from a preset type and voltage relationship, where the type and voltage relationship includes a plurality of corresponding relationships between different battery types and the voltage values; and
an eighth determination subunit 2602, configured to determine the voltage value corresponding to the battery type as the constant charging voltage.

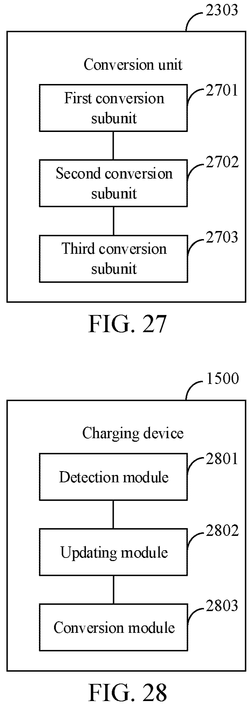

In an embodiment, as shown in FIG. 27, the conversion unit 2303 includes:
a first conversion subunit 2701, configured to, when the interaction parameter type is a current, convert the charging parameter value of the battery into a charging current value required for charging the battery during the end-of-charge phase according to the status information of the battery;
a second conversion subunit 2702, configured to, when the interaction parameter type is a voltage, convert the charging parameter value of the battery into a charging voltage value required for charging the battery during the end-of-charge phase according to the status information of the battery; and
a third conversion subunit 2703, configured to, when the interaction parameter type is power, convert the charging parameter value of the battery into the charging power value required for charging the battery at the end-of-charge phase according to the status information of the battery.

In an embodiment, as shown in FIG. 28, the apparatus 1500 further includes:
a detection module 2801, configured to, when the electrical parameter value is sent to the charging pile, detect a charging status of the battery;
an updating module 2802, configured to, when the charging status of the battery is abnormal, re-execute the acquiring the interaction parameter type between the charging pile and the battery is re-executed, so as to acquire a new interaction parameter type; and
a conversion unit 2803, configured to, according to the new interaction parameter type and the status information of the battery, convert the charging parameter value of the battery into the new electrical parameter value required for charging the battery during the end-of-charge phase.

In an embodiment, the charging cut-off condition includes at least one of the following: the battery voltage of the battery reaches a second voltage threshold; and the battery capacity of the battery reaches a second capacity threshold.

The modules in the charging apparatus may be implemented fully or partially by software, hardware, and a combination thereof. The above modules may be embedded in or independent of a processor in the computer device in a hardware form, or may be stored in a memory in the computer device in a software form, so that the processor invokes and performs operations corresponding to the above modules.

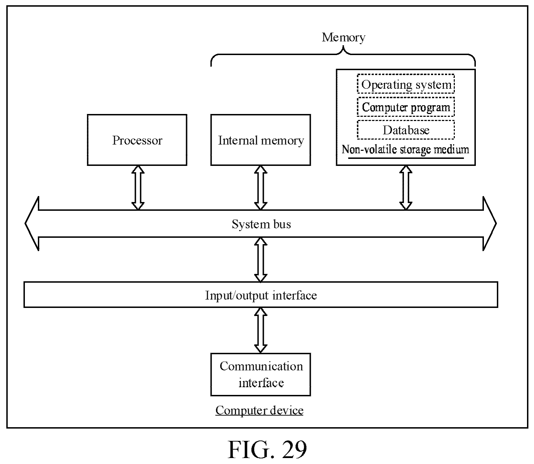

In an exemplary embodiment, provided is a computer device, the computer device may be a server, and an internal structure diagram of the computer device may be as shown in FIG. 29. The computer device includes a processor, a memory, an input/output (I/O) interface, and a communication interface. The processor, the memory, and the input/output interface are connected by using a system bus, and the communications interface is connected to the system bus by using the input/output interface. The processor of the computer device is configured to provide computing and control capabilities. The memory of the computer device includes a non-volatile storage medium and an internal memory. The non-volatile storage medium stores an operating system, a computer process, and a database. The internal memory provides an environment for running of the operating system and the computer process in the non-volatile storage medium. The database of the computer device is configured to store charging data. An input/output interface of the computer device is configured to exchange information between the processor and an external device. The communication interface of the computer device is configured to communicate with an external terminal through a network connection. The computer process is executed by the processor to implement the steps of the charging method provided in any one of the embodiments of the present application.

Those skilled in the art may understand that the structure shown in FIG. 29 is merely a block diagram of a partial structure related to the solutions of the present application, and does not constitute a limitation on the computer device to which the solutions of the present application are applied, and the specific computer device may include more or fewer components than those shown in the figure, or combine some components, or have different component arrangements.

In an embodiment, further provided is a computer device, including a memory and a processor, where the memory stores a computer program; and the processor, when executing the computer program, implements steps of the method in the above embodiments.

The steps implemented by the processor in this embodiment have implementation principles and technical effects similar to the principles of the charging method described above, and details are not described herein again.

In an embodiment, provided is a computer-readable storage medium, storing a computer program, where the computer program, when executed by a processor, implements the steps in the above embodiments.

The steps implemented when the computer program is executed by the processor in this embodiment have implementation principles and technical effects similar to the principles of the charging method described above, and details are not described herein again.

In an embodiment, provided is a computer program product, including a computer program, where the computer program, when executed by a processor, implements the method in the above embodiments.

The steps implemented when the computer program is executed by the processor in this embodiment have implementation principles and technical effects similar to the principles of the charging method described above, and details are not described herein again.

It should be noted that the data (including, but not limited to data for analysis, stored data, displayed data, and the like) involved in the present application is all information and data authorized by users or fully authorized by all parties, and the collection, use and processing of related data need to comply with relevant regulations.

Those of ordinary skill in the art may understand that all or part of the flows in the method of the above embodiments may be implemented by instructing related hardware through a computer process, the computer program may be stored in a non-volatile computer-readable storage medium, and when the computer program is executed, the computer program may include the flow of the embodiments of the above methods. Any reference to a memory, a database, or another medium used in the embodiments provided in the present application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), or an external cache memory, or the like. As an illustration rather than a limitation, the RAM may be in a plurality of forms, for example, a static random access memory (SRAM) or a dynamic random access memory (DRAM), and the like. The database involved in the embodiments provided in the present application may include at least one of a relational database and a non-relational database. The non-relational database may include a blockchain-based distributed database, etc., and is not limited thereto. The processor involved in the embodiments provided in the present disclosure may be a general-purpose processor, a central processing unit, a graphics processing unit, a digital signal processor, a programmable logic device, a data processing logic device based on quantum computing, or the like, which is not limited thereto.

The technical features of the above-mentioned embodiments may be combined, and all possible combinations of the technical features in the above-mentioned embodiments are not described for concise description, however, it should be regarded that the combinations of the technical features are with the range described in the present description as long as there is no inconsistency.

The above embodiments merely illustrate several implementations of the present application, which are described specifically and detailedly, but are not to be construed as limiting the scope of the patent application. It should be noted that for those of ordinary skill in the art, several variations and modifications may be made without departing from the concept of the present application, which are all within the protection scope of the present application. Therefore, the scope of the present application shall be subject to the appended claims.

## Claims

1. A charging method, comprising:
when a battery reaches an end-of-charge phase, acquiring a charging mode of the battery during the end-of-charge phase, wherein in the charging mode, a charging current of the battery changes dynamically;
determining an electrical parameter value required for charging the battery during the end-of-charge phase on the basis of the charging mode and status information of the battery; and
sending the electrical parameter value to a charging pile of the battery until a charging cut-off condition of the battery is reached.

2. The method according to claim 1, further comprising:
when a battery voltage of the battery reaches a first voltage threshold, determining that the battery reaches the end-of-charge phase; or,
when a battery capacity of the battery reaches a first capacity threshold, determining that the battery reaches the end-of-charge phase; or,
when the battery voltage of the battery reaches the first voltage threshold and the battery capacity reaches the first capacity threshold, determining that the battery reaches the end-of-charge phase.

3. The method according to claim 1 or 2, wherein the acquiring a charging mode of the battery during the end-of-charge phase comprises:
acquiring response information of the charging pile;
determining a response speed of the charging pile according to the response information of the charging pile; and
determining the charging mode of the battery during the end-of-charge phase according to the response speed of the charging pile.

4. The method according to claim 3, wherein the determining a response speed of the charging pile according to the response information of the charging pile comprises:
according to the response information of the charging pile, acquiring a first moment at which a historical electrical parameter value is sent to the charging pile and a second moment at which the battery is charged by the charging pile with a target electrical parameter, wherein an absolute value of a difference between the historical electrical parameter and the target electrical parameter is less than a preset difference threshold;
determining a duration at which the charging pile charges the battery according to the first moment and the second moment;
and
determining the response speed of the charging pile according to the duration.

5. The method according to claim 3, wherein the determining the charging mode of the battery during the end-of-charge phase according to the response speed of the charging pile comprises:
when the response speed of the charging pile is greater than a preset speed threshold, determining that the charging mode of the battery during the end-of-charge phase is constant power charging.

6. The method according to claim 1 or 2, wherein the acquiring a charging mode of the battery during the end-of-charge phase comprises:
acquiring characteristic information of the battery; and
determining the charging mode of the battery during the end-of-charge phase according to the characteristic information of the battery.

7. The method according to claim 6, wherein the characteristic information comprises a current temperature of the battery; and the determining the charging mode of the battery during the end-of-charge phase according to the characteristic information of the battery comprises:
when the current temperature of the battery is greater than a preset temperature threshold, determining that the charging mode of the battery during the end-of-charge phase is constant voltage charging.

8. The method according to claim 6, wherein the characteristic information comprises a battery type; and the determining the charging mode of the battery during the end-of-charge phase according to the characteristic information of the battery comprises:
acquiring a charging mode corresponding to the battery type from a preset charging mode calibration table, wherein the charging mode calibration table comprises corresponding relationships between different battery types and charging modes; and
determining the charging mode corresponding to the battery type as the charging mode of the battery during the end-of-charge phase.

9. The method according to claim 1 or 2, wherein the determining an electrical parameter value required for charging the battery during the end-of-charge phase on the basis of the charging mode and status information of the battery comprises:
acquiring an interaction parameter type between the charging pile and the battery;
determining a charging parameter value of the battery indicated by the charging mode according to the charging mode; and
converting the charging parameter value of the battery into the electrical parameter value required for charging the battery during the end-of-charge phase according to the interaction parameter type and the status information of the battery.

10. The method according to claim 9, wherein the acquiring an interaction parameter type between the charging pile and the battery comprises:
acquiring a plurality of charging parameter types currently available to the charging pile and a usage rate of each of the charging parameter types; and
determining the charging parameter type with the usage rate meeting a preset condition as the interaction parameter type between the charging pile and the battery.

11. The method according to claim 9, wherein when the charging mode is the constant power charging, the charging parameter value of the battery indicated by the charging mode is constant charging power; and
the determining a charging parameter value of the battery indicated by the charging mode according to the charging mode comprises:
acquiring a power value corresponding to the battery type of the battery from a preset type and power relationship, wherein the type and power relationship comprises a plurality of corresponding relationships between different battery types and the power values; and
determining the power value corresponding to the battery type as the constant charging power.

12. The method according to claim 9, wherein when the charging mode is the constant voltage charging, the charging parameter value of the battery indicated by the charging mode is a constant charging voltage; and
the determining a charging parameter value of the battery indicated by the charging mode according to the charging mode comprises:
acquiring a voltage value corresponding to the battery type of the battery from a preset type and voltage relationship, wherein the type and voltage relationship comprises a plurality of corresponding relationships between different battery types and the voltage values; and
determining the voltage value corresponding to the battery type as the constant charging voltage.

13. The method according to claim 9, wherein the converting the charging parameter value of the battery into the electrical parameter value required for charging the battery during the end-of-charge phase according to the interaction parameter type and the status information of the battery comprises:
when the interaction parameter type is a current, converting the charging parameter value of the battery into a charging current value required for charging the battery during the end-of-charge phase according to the status information of the battery;
when the interaction parameter type is a voltage, converting the charging parameter value of the battery into a charging voltage value required for charging the battery during the end-of-charge phase according to the status information of the battery; and
when the interaction parameter type is power, converting the charging parameter value of the battery into a charging power value required for charging the battery during the end-of-charge phase according to the status information of the battery.

14. The method according to claim 9, further comprising:
when the electrical parameter value is sent to the charging pile, detecting a charging status of the battery;
when the charging status of the battery is abnormal, re-executing the acquiring the interaction parameter type between the charging pile and the battery, so as to acquire a new interaction parameter type; and
converting the charging parameter value of the battery into a new electrical parameter value required for charging the battery during the end-of-charge phase according to the new interaction parameter type and the status information of the battery.

15. The method according to claim 1 or 2, wherein the charging cut-off condition comprises at least one of the following:
the battery voltage of the battery reaches a second voltage threshold; and
the battery capacity of the battery reaches a second capacity threshold.

16. A charging apparatus, comprising:
an acquisition module, configured to, when a battery reaches an end-of-charge phase, acquire a charging mode of the battery during the end-of-charge phase, wherein in the charging mode, a charging current of the battery changes dynamically;
a determination module, configured to determine an electrical parameter value required for charging the battery during the end-of-charge phase on the basis of the charging mode and status information of the battery; and
a sending module, configured to send the electrical parameter value to a charging pile of the battery until a charging cut-off condition of the battery is reached.

17. A computer device, comprising a memory and a processor, wherein the memory stores a computer program; and the processor, when executing the computer program, implements steps of the method according to any one of claims 1 to 15.

18. A computer-readable storage medium, storing a computer program, wherein the computer program, when executed by a processor, implements steps of the method according to any one of claims 1 to 15.
